# EUROPÄISCHE PATENTSCHRIFT

(11) **EP 1 804 045 B1**
(45) Veröffentlichungstag und Bekanntmachung des Hinweises auf die Patenterteilung: **12.03.2014**
(21) Anmeldenummer: 05028767.1
(22) Anmeldetag: 30.12.2005
(51) Int. Cl.: G01N 1/30, B01L 3/00

(54) **Ein Verfahren und ein Kit zur Behandlung einer biologischen Probe**
Method and Kit for treating a biological sample
Procédé et kit pour traitement d'un échantillon biologique

(43) Veröffentlichungstag der Anmeldung: 04.07.2007
(73) Patentinhaber: QIAGEN GmbH, 40724 Hilden (DE)
(72) Erfinder: Holländer, Vera Dr., 59423 Unna (DE)
(74) Vertreter: Schneider, Jürgen M.

(56) Entgegenhaltungen:
- EP-A- 0 311 035
- EP-A- 0 338 469
- EP-A- 1 455 174
- WO-A1-00/32252
- US-A- 5 104 640
- US-A- 5 482 676
- US-A1- 2003 086 830
- US-A1- 2005 195 684
- US-B1- 6 207 408
- US-B1- 6 929 782
- PATENT ABSTRACTS OF JAPAN Bd. 007, Nr. 039 (C-151), 17. Februar 1983 (1983-02-17) & JP 57 189698 A (DASUKIN FURANCHIYAIZU KK), 22. November 1982 (1982-11-22)

## Beschreibung

Die vorliegende Erfindung betrifft ein Verfahren zur Stabilisierung von Biomolekülen in einer biologischen Probe, sowie einen Kit Zusammensetzung zur Durchführung des Verfahrens.

Lange Zeit stand nur die pathologische bzw. histologische Untersuchung von biologischen Proben im Vordergrund. Wenn überhaupt, erfolgte eine Konservierung bzw. Stabilisierung der Proben für derartige Untersuchungen üblicherweise durch das Einlegen der Proben in Formaldehyd-Lösungen und/oder durch das Einbetten der Proben in Paraffin. Aber auch das Kühlen bzw. Einfrieren zur Konservierung von biologischen Proben ist schon lange gängige Praxis.

Erst als erkannt wurde, dass der Nachweis bestimmter Bestandteile biologischer Proben, wie beispielsweise Nukleinsäuren oder Proteine, insbesondere im Bereich der medizinischen und klinischen Diagnostik, von großem Nutzen ist, wurde auch die Notwendigkeit von neuen effektiveren sowie wirtschaftlicheren Konservierungs- bzw. Stabilisierungsreagenzien und/oder -verfahren deutlich.

Im Zuge dieser Entwicklungen wurde erkannt, dass gerade der Status (Genexpressionsprofil oder Proteinmuster) der für die molekularbiologische Untersuchung wichtigen Bestandteile der frischen Proben sich bereits direkt nach der Entnahme der Probe aus ihrer natürlichen Umgebung rapide verändern kann, so dass bereits eine längere Lagerung der Proben in einem unbehandelten Zustand, z. B. bedingt durch einen ungewollt verzögerten Transport in ein Labor etc., eine molekularbiologische Analyse verfälschen oder diese gar gänzlich unmöglich machen kann.

Gerade der Nukleinsäure-Status einer biologischen Probe verändert sich umso stärker, je mehr Zeit zwischen der Entnahme der Probe und ihrer Analyse verstreicht. Besonders schnell erfolgt hierbei der Abbau der Ribonukleinsäuren (RNA) durch allgegenwärtige RNasen. Ebenso kommt es neben dem Abbau von Nukleinsäuren auch zur Induktion von beispielsweise Stressgenen und damit zur Synthese neuer mRNA-Moleküle, die das Transkriptmuster der Probe ebenfalls stark verändern. Daher ist es erforderlich, zum Erhalt des zu untersuchenden Genexpressionsprofils eine sofortige Stabilisierung der Probe durchzuführen.

Nicht nur für die Analyse von Nukleinsäuren sondern auch für detaillierte Untersuchungen des Proteoms einer biologischen Probe ist eine sofortige Stabilisierung der Probe notwendig, da auch das Proteinmuster unmittelbar nach Entnahme der Probe verändert wird. Dies erfolgt zum einen durch Degradation bzw. Neusynthese, zum anderen aber besonders rasch durch Veränderungen der Proteinmodifikationen, wie z. B. Phosphorylierung/ Dephosphorylierung.

Da proteinchemische und molekularbiologische Analysen neben dem Bereich der medizinischen und klinischen Diagnostik auch verstärkt in anderen Bereichen, wie der Forensik, Pharmazie, der Lebensmittelanalytik, der Agrarwirtschaft, der Umweltanalytik sowie in vielen Forschungsgebieten Anwendung finden, stellt somit auch die Erhaltung der Integrität der molekularen Struktur der Proben und damit verbunden, deren unmittelbare Stabilisierung, in all diesen Bereichen eine notwendige Voraussetzung dar.

Im Laufe der Jahre wurden so eine Vielzahl von unterschiedlichsten Stabilisierungsreagenzien bzw. Methoden zur Stabilisierung entwickelt, um einen großen Bereich an verschiedenartigen biologischen Proben zu stabilisieren.

Wie bereits eingangs erwähnt, ist die Stabilisierung mittels Formalin und anschließendes Einbetten der stabilisierten Proben für histologische Gewebeuntersuchen bereits seit langem bekannt. Eine solche Stabilisierung ist aber zumeist ungeeignet für die Anwendung molekularbiologischer Verfahren, da nur eine sehr unzureichende Stabilisierung der Nukleinsäuren erfolgt, und so maximal ein qualitativer, nicht aber ein quantitativer Nachweis der vorhandenen Nukleinsäuren bzw. Nukleinsäurefragmente möglich ist. Darüber hinaus führt die Stabilisierung mit vernetzend wirkenden Stabilisierungsmitteln wie Formalin zu einer verminderten Extrahierbarkeit der Nukleinsäuren oder Proteine aus den Geweben. Auch ist Formalin aus toxikologischen Gründen nicht unbedenklich.

Stabilisierungsreagenzien, wie z. B. die in US 5.010,184, US 5.300,545, WO-A-02/00599 und WO-A-02/00600 beschriebenen kationische Detergentien, mit denen hingegen sehr gute qualitative Nachweise der Nukleinsäuren erfolgen können, eigenen sich nur für Proben, welche Einzelzellen enthalten bzw, nur eine Zellschicht aufweisen. Für eine Stabilisierung von Nukleinsäuren in kompakten Gewebestücken sind derartige Stabilisierungsreagenzien jedoch nicht ausreichend.

Darüber hinaus eigenen sich diejenigen Reagenzien und Verfahren, mit denen Nukleinsäuren für qualitative Nachweise stabilisiert werden können, in der Regel auch nicht zur gleichzeitigen Stabilisierung von Proteinen. Zudem kann mit derartig stabilisierten Proben keine histologische Untersuchung durchgeführt werden, da das Stabilisierungsmittel zwar z. B. die Nukleinsäuren, aber nicht die Zell- bzw. Gewebestrukturen konserviert.

Wieder andere Stabilisierungsreagenzien, welche beispielsweise hochkonzentriertes Ammoniumsulfat (siehe z. B. US 6,204,375) enthalten, eignen sich gut zur Stabilisierung von Nukleinsäuren in unterschiedlichen Geweben. Sie sind jedoch weitgehend ungeeignet für den Einsatz zur Stabilisierung von zellhaltigen oder zellfreien Körperflüssigkeiten, wie z. B. Blut, Serum oder Plasma und weisen zudem weniger gute Stabilisierungseigenschaften bei einigen Gewebetypen, wie z. B. Fettgewebe, auf.

Hieran zeigt sich, dass es insbesondere schwierig ist, in Gewebeproben gleichzeitig RNA, DNA und Proteine zu stabilisieren und zugleich auch die Gewebeproben histologisch zu konservieren. Darüber hinaus können Arbeiten mit Zellen oder anderen biologischen Proben nicht unbedingt auf kompakte Gewebe übertragen werden. Für die Stabilisierung von Nukleinsäuren in kompakten Gewebeproben ergibt sich im Vergleich zu anderen biologischen Proben eine besondere Schwierigkeit Gewebe sind, bezüglich ihrer Zusammensetzung, ihrer Inhaltsstoffe sowie dem Aufbau vielschichtig und heterogen. Für die Stabilisierung von Nukleinsäuren in kompakten Gewebeproben muss sich die Wirkung des stabilisierenden Reagenzes nicht nur an der Oberfläche der Zellen bzw. innerhalb einer Zellschicht entfalten, sondern auch tief innerhalb des vielschichtigen Probenmaterials wirken. Zudem müssen häufig innerhalb ein und derselben biologischen Probe sehr verschiedene Gewebe- und/oder Zelltypen adressiert werden können, die sich beispielsweise in der Zellstruktur, dem Membranaufbau, den Kompartimentierungen und den Biomolekülen, beispielsweise hinsichtlich der Proteine, der Kohlenhydrate und/oder dem Fettgehalt, unterscheiden.

Eine im Stand der Technik bekannte und sehr häufig verwendete Form der Stabilisierung von Gewebeproben, inklusive aller Bestandteile, ist das Einfrieren bzw. Tiefgefrieren der Proben. Hierbei wird die Probe direkt nach der Entnahme aus ihrer natürlichen Umgebung bei unter -80°C in flüssigem Stickstoff tiefgefroren. Die so behandelte Probe kann dann ohne Integritätsveränderungen bei etwa -70°C nahezu unbegrenzt gelagert werden. Derartige Verfahren erfordern jedoch durchweg sehr aufwendige, logistische Voraussetzungen, da ein Auftauen der Proben während des Transports, der Lagerung oder während der unterschiedlichsten An- bzw. Verwendungsprozesse verhindert werden muss. Neben den zusätzlichen Kosten für spezielle Probenaufnahmegefäße sowie für die permanente Kühlung der Proben, ist zudem der Einsatz von flüssigem Stickstoff nicht nur sehr umständlich, sondern auch nur unter besonderen Vorsichtsmaßnahmen durchführbar.

Darüber hinaus gestaltet sich eine nachfolgende Analyse des gefrorenen Probenmaterials, insbesondere einzelner Bestandteile der Probe, zumeist sehr schwierig. So führt beispielsweise das Auf oder Antauen der Probe während der Lagerung, des Transportes oder der Verarbeitung zum Abbau insbesondere der RNA. D. h. derartig an- bzw. aufgetaute Proben liefern keine reproduzierbaren Ergebnisse mehr. Zudem sind gerade Gewebestücke im gefrorenen Zustand nur schwer manuell oder nur mit einem erhöhten apparativen Aufwand zu verarbeiten, beispielsweise zu zerteilen.

Zur Verringerung der Nachteile beim Verarbeiten von gefrorenen Proben insbesondere für die Isolierung von RNA sind ebenfalls sogenannte Transitionslösungen beschrieben. Dabei wird zunächst das gefrorene Gewebe in eine auf -70°C bis -80°C vorgekühlte Lösungen überführt und anschließend darin für einige Stunden (mindestens 16 Std.) bei etwa -20°C gelagert wird. Nachfolgend kann dann die mit der Transitionslösung durchtränkte Probe nur für einen kurzen Zeitraum, beispielsweise maximal zum Zerteilen der Probe, auf Arbeitstemperaturen von -4°C bis zu Raumtemperatur erwärmt werden, ohne dass sich der Nukleinsäurestatus der Probe verändert. Weitere Analysen sowie die Lagerung der Probe sind insbesondere bei Raumtemperatur jedoch nicht möglich. Derartige, beispielsweise aus der WO-A-2004/72270 bekannte, Transitionslösungen bestehen vornehmlich aus einwertigen Alkoholen.

Nachteiligerweise bleiben die mit gängigen Transitionslösungen behandelten Proben nur für einen sehr kleinen Zeitraum bei Raumtemperatur stabil, womit die Zeit zur Verarbeitung nur knapp bemessen ist und insbesondere bei der Bearbeitung vieler Proben, insbesondere mit Schneide- und Wiegevorgängen, sehr leicht überschritten wird. Darüber hinaus erfolgt die Transition nur sehr langsam, wodurch keine direkten Experimente folgen können und sich Wartezeiten von zumeist einem Tag ergeben. Ebenso ist ein unbeschadeter Transport der so behandelten Proben bei Raumtemperatur unmöglich, da nicht nur die Transition bei Temperaturen von ≤ -20°C erfolgen muss, sondern auch die anschließende stabile Lagerung der Probe. Auch ein Transport der Probe ist nur bei ≤ -20°C möglich, was den Einsatz von Kühlmitteln, beispielsweise von Trockeneis, beim Transport erforderlich macht. Darüber hinaus ist zu beachten, dass die in der WO-A-2004/72270 eingesetzten einwertigen Alkohole, wie etwa Methanol, Ethanol oder Isopropanol, leichtentzündlich, flüchtig oder toxisch sind und somit bei deren Einsatz bestimmte Sicherheitsvorkehrungen zu treffen sind.

Durch die Verwendung der herkömmlichen Transitionslösungen werden zwar Verbesserungen beim Verarbeiten der Proben, wie z. B. dem Abwiegen oder Zuschneiden, erzielt, sie verringern jedoch weder den apparativen Aufwand (da die Lösung zur Transition bei -70 bis -80°C vorgekühlt werden muss und daher trotzdem eine entsprechende Kühlvorrichtung zur Verfügung stehen muss), noch können die mit der Transitionslösung behandelten Proben bei Raumtemperatur über einen längeren Zeitraum stabilisiert werden.

Der vorliegenden Erfindung lag die Aufgabe zugrunde, die sich aus dem Stand der Technik ergebenden Nachteile zu überwinden.

Insbesondere lag der vorliegenden Erfindung die Aufgabe zugrunde, ein Verfahren zur Stabilisierung einer biologischen Probe anzugeben, was möglichst ohne den Einsatz leichtentzündlicher, flüchtiger, carcinogener, fruchtschädigender, umweltgefährdender oder toxischer Substanzen zu einer zufrieden stellenden Stabilisierung der biologischen Probe führt.

Darüber hinaus lag der vorliegenden Erfindung die Aufgabe zugrunde, ein Verfahren zur Stabilisierung einer biologischen Probe anzugeben, mit dem sowohl gefrorene als auch frische biologische Proben bei möglichst moderaten Temperaturbedingungen, beispielsweise auch bei Raumtemperatur, ohne Beeinträchtigung des Expressionsprofils oder des Proteoms der biologischen Probe stabilisiert werden können.

Darüber hinaus sollte das Verfahren zur Stabilisierung einer biologischen Probe sowohl eine histologische Analyse der stabilisierten biologischen Probe, als auch eine Analyse der in der biologischen Probe enthaltenen Biomoleküle ermöglichen. In diesem Zusammenhang sollte das Stabilisierungsverfahren es insbesondere ermöglichen, dass sowohl Proteine als auch Nukleinsäuren qualitativ und quantitativ in der stabilisierten biologischen Probe analysiert werden können. Zudem sollte durch die Stabilisierung der biologischen Probe die Qualität der Nukleinsäuren, welche beispielsweise durch Gel-Analyse oder durch die Anzahl der PCR-Zyklen bis zum Erreichen einer bestimmten Nukleinsäuremenge bestimmt werden kann, und die Qualität der Proteine, welche beispielsweise im Falle eines Enzyms durch entsprechende Aktivitätstests bestimmt werden kann, nicht oder allenfalls nur geringfügig beeinträchtigt werden.

Weiterhin sollte das Verfahren zur Stabilisierung einer biologischen Probe zu einer stabilisierten biologischen Probe führen, die nicht nur bei moderaten Temperaturen, beispielsweise bei Raumtemperatur, analysiert werden kann, sondern gegebenenfalls vor oder nach einer solchen Analyse für möglichst lange Zeit bei solchen moderaten Temperaturbedingungen gelagert werden kann.

Im Falle von Biomolekülen soll dabei unter dem Begriff "Stabilisierung" vorzugsweise die Hemmung des Abbaus, der Modifikation, der Induktion oder der Änderung der Aktivität von Biomolekülen verstanden werden. Im Falle von histologischen Analysen der biologischen Proben soll unter dem Begriff "Stabilisierung" vorzugsweise das Verhindern einer wesentlichen Änderung der Morphologie der Proben verstanden werden.

Des Weiteren 1ag der vorliegenden Erfindung die Aufgabe zugrunde, eine Vorrichtung anzugeben, mit der eine biologische Probe unter Verwendung des erfindungsgemäßen Stabilisierungsverfahrens in einfacher Weise stabilisiert werden kann.

Die Eingangs genannten Aufgaben werden durch das erfindungsgemäße Verfahren zur Stabilisierung einer biologischen Probe gelöst, umfassend die Verfahrensschritte wie in Anspruch 1 definiert.

Mit dem erfindungsgemäßen Verfahren können frisch isolierte biologische Proben stabilisiert sowie gefrorene, beispielsweise in flüssigem Stickstoff tiefgefrorene, biologische Proben für eine histologische oder molekularbiologische Analyse vorbereitet werden. Dabei ist es nicht erforderlich, die mit der Zusammensetzung in Kontakt gebrachte biologische Probe auf Temperaturen von weniger als 0°C zu kühlen und bei solch geringen Temperaturen zu Analysieren oder zu Lagern, so dass das erfindungsgemäße Verfahren ohne einen apparativen Aufwand, insbesondere ohne Kühlvorrichtungen oder Kühlmittel, durchgeführt werden kann.

Bei der im Verfahrensschritt i) bereitgestellten biologischen Probe kann es sich um eine gefrorene oder um eine nicht gefrorene biologische Probe handeln, wobei als biologische Probe alle dem Fachmann bekannten biologischen Proben eingesetzt werden können. Bevorzugte biologische Proben sind ausgewählt aus der Gruppe umfassend Biomoleküle, beispielsweise natürliche, vorzugsweise isolierte lineare, verzweigte oder zirkuläre Nukleinsäuren wie RNA, insbesondere mRNA, siRNA, miRNA, snRNA, tRNA, hnRNA oder Ribozyme, DNA und dergleichen, synthetische oder modifizierte Nukleinsäuren, beispielsweise Oligonukleotide, insbesondere für die PCR verwendete Primer, Sonden oder Standards, mit Digoxigenin, Biotin oder Fluoreszensfarbstoffen markierte Nukleinsäuren oder sogenannte PNAs (*"peptide nucleic acids"),* natürliche, vorzugsweise isolierte Proteine oder Oligopeptide, synthetische oder modifizierte Proteine oder Oligopeptide, beispielsweise mit Fluoreszenzmarkern oder Enzymen gekoppelte Antikörper, Hormone, Wachstumsfaktoren, Lipide, Oligosaccharide, Polysaccharide, Proteoglukane, Körperflüssigkeiten wie Blut, Sperma, Cerebrospinalflüssigkeit, Speichel, Sputum oder Urin, Flüssigkeiten, welche beim Aufarbeiten von Blut erhalten werden, wie etwa Serum oder Plasma, Leukozyten-Fraktionen oder "buffy coat", Blutegelspeichel (Saliva), Fäkalien, Abstriche, Punktate, Schuppen, Haare, Hautfragmente, forensische Proben, Lebensmittel- oder Umweltproben, die freie oder gebundene Biomoleküle, insbesondere freie oder gebundene Nukleinsäuren enthalten, Stoffwechselprodukte, ganze Organismen, vorzugsweise ganze nicht lebende Organismen, Gewebe von Mehrzellern, vorzugsweise von Insekten und Säugetieren, insbesondere vom Menschen, beispielsweise in Form von Gewebeschnitten oder Organen, isolierte Zellen, beispielsweise in Form adhärenter oder suspendierter Zellkulturen, Organellen, beispielsweise Chloroplasten oder Mitochondrien, Vesikel, Zellkerne oder Chromosomen, Pflanzen, Pflanzenteile, Pflanzengewebe oder Pflanzenzellen, Bakterien, Viren, Viroide, Prionen, Hefen und Pilze.

Als eine nichtgefrorene biologische Probe wird im Verfahrensschritt i) des erfindungsgemäßen Verfahrens vorzugsweise eine frisch hergestellte biologische Probe eingesetzt, beispielsweise eine frische Gewebeprobe oder frisch isolierte Blutzellen aus einem lebendigen oder toten Organismus oder, im Falle synthetischer Biomoleküle als biologische Probe, frisch synthetisierte Nukleinsäuren oder Proteine. Unter einer "frischen" biologischen Probe wird dabei erfindungsgemäß vorzugsweise eine Probe verstanden, die, bevor sie mit der Zusammensetzung im Verfahrensschritt ii) in Kontakt gebracht wird, vor nicht mehr als 96 Stunden, vorzugsweise vor nicht mehr als 48 Stunden, besonders bevorzugt vor nicht mehr als 24 Stunden, darüber hinaus bevorzugt vor nicht mehr als 10 Stunden, darüber hinaus noch mehr bevorzugt vor nicht mehr als 60 Minuten und am meisten bevorzugt vor nicht mehr als 10 Minuten entnommen oder, im Falle eines synthetischen Biomoleküls, synthetisiert worden ist. Die Bezeichnung "frische" biologische Probe umfasst jedoch auch solche Proben, die innerhalb der vorstehend genannten Zeiträume entnommen worden sind, die jedoch vor dem in Kontakt bringen mit der Zusammensetzung noch vorbehandelt worden sind, beispielsweise mit herkömmlichen Fixativen, wie etwa Formalin, mit Farbstoffen, wie etwa Eosin, mit Antikörpern und dergleichen. Die Herstellung frischer Zell- oder Gewebeproben kann dabei durch alle dem Fachmann zu diesem Zweck bekannten Präparationsverfahren erfolgen, im Falle einer Gewebeprobe beispielsweise mittels eines Skalpells, etwa bei einer Operation oder einer Autopsie, im Falle einer Blutzellprobe durch Zentrifugation von frisch entnommenem Blut und dergleichen. Im Falle eines Einsatzes einer frischen biologischen Probe dient die Zusammensetzung, welche im Verfahrensschritt ii) eingesetzt wird, in erster Linie als Stabilisierungszusammensetzung.

Als eine gefrorene biologische Probe wird im Verfahrensschritt i) des erfindungsgemäßen Verfahrens vorzugsweise eine biologische Probe eingesetzt, die, nachdem sie auf die zuvor beschriebene Art und Weise isoliert worden ist, vor dem in Kontakt bringen mit der Zusammensetzung im Verfahrensschritt ii) zunächst auf Temperaturen von 0°C oder weniger, vorzugsweise auf Temperaturen von -20°C oder weniger und am meisten bevorzugt auf Temperaturen von -70°C oder weniger, etwa durch das in Kontakt bringen mit flüssigem Stickstoff, abgekühlt worden ist. Wird eine auf diese Weise eingefrorene biologische Probe im erfindungsgemäßen Verfahren eingesetzt, so dient die Zusammensetzung, welche im Verfahrensschritt ii) eingesetzt wird, in erster Linie als Transitionszusammensetzung.

Bei dem erfindungsgemäßen Verfahren wird eine Zusammensetzung enthaltend ein C5 oder C6 Polyol (α1) verwendet, wobei es sich um ein Diol, oder ein Triol handelt. Ein Triol ist am meisten bevorzugt.

Die Polyole können grundsätzlich geradkettig, verzweigt oder zyklisch sein. Im Falle eines linearen oder verzweigten Polyols kann es besonders vorteilhaft es sein, wenn die Polyole jeweils an den Enden der längsten Kohlenwasserstoffkette im Molekül eine OH-Gruppe tragen.

Erfindungsgemäß besonders geeignete Polyole sind ausgewählt, aus der Gruppe umfassend 1,2-Pentandiol, 1,3-Pentandiol, 1,4-Pentandiol, 1,5-Pentandiol, 2,3-Pentandiol, 2,4-Pentandiol, 2-Methyl-2,4-Pentandiol, 1,2-Hexandiol, 1,3-Hexandiol, 1,4-Hexandiol, 1,5-Hexandiol, 1,6-Hexandiol, 2,3-Hexandiol, 2,4-Hexandiol, 2,5-Hexandiol, 3,4-Hexandiol, cis- oder trans-1,2-Cylopentandiol, cis- oder trans-1,3-Cylopentandiol, cis- oder trans-1,2-Cylohexandiol, cis- oder trans-1,3-Cylohexandiol, cis- oder trans-1,4-Cylohexandiol, 1,2,3-Cyclopentantriol, 1,2,4-Cyclopentantriol, 1,2,3-Cyclohexantriol, 1,2,4-Cyclohexantriol, 1,2,3-Pentantriol, 1,2,4-Pentantriol, 1,2,5-Pentantriol, 2,3,4-Pentantriol, 1,3,5-Pentantriol, 3-Methyl-1,3,5-Pentantriol, 1,2,3-Hexantriol, 1,2,4-Hexantriol, 1,2,5-Hexantriol, 1,2,6-Hexantriol, 2,3,4-Hexantriol, 2,3,5-Hexantriol.

Die Polyole können in der erfindungsgemäßen Zusammensetzung einzeln oder in Form einer Mischung aus zwei, drei, vier oder fünf verschiedenen Polyolen vorliegen, wobei Mischungen aus zwei verschiedenen Diolen, Mischungen aus zwei verschiedenen Triolen, Mischungen aus einem Diol und einem Triol, besonders bevorzugt und Mischungen aus zwei verschiedenen Triolen als Polyol-Mischungen am meisten bevorzugt sind.

Bei dem gegebenenfalls in der Zusammensetzung enthaltenen Additiv (α2) kann es sich um weitere, von Polyolen verschiedene Lösungsmittel handeln, sowie Mischungen aus mindestens zwei, mindestens drei, mindestens vier, mindestens fünf oder mindestens sechs dieser Additive.

Bei dem von einem Polyol verschiedenen Lösungsmittel handelt es sich um ein von einem Polyol verschiedenes organisches Lösungsmittel, welches vorzugsweise ausgewählt ist aus der Gruppe umfassend einwertige Alkohole (Monoole), Ketone, Dimethylsulfoxid, aromatische Kohlenwasserstoffe, halogenierte Kohlenwasserstoffe, Ether, Carbonsäuren, Carbonsäureamide, Nitrile, Nitroalkane und Ester, wobei geeignete Lösungsmittel beispielsweise ausgewählt sein können aus der Gruppe Methanol, Ethanol, 1-Propanol, 2-Propanol, Acetonitril, Aceton, Anisol, Benzonitril, 1-Methoxy-2-Propanol, Quinolin, Cyclohexanon, Diacetin, Dichloromethan, Chloroform, Diethylether, Dimethylether, Toluol, Dimethylketon, Diethylketon, Dimethyladipat, Dimethylcarbonat, Dimethylsulfit, Dioxan, Dimethylsulfoxid, Methylacetat, Ethylacetat, Benzoesäure, Methylbenzoat, Ethylbenzoat, Ethylbenzol, Formamid, Glycerintriacetat, Ethylacetoacetat, Methylacetoacetat, N,N-Diethylacetamid, N-Methyl-N-ethylacetamid, N,N-Dimethylacetamid, N,N-Dimethylformamid, N-Methyl-N-ethylformamid, N,N-Diethylformamid, N,N-Dimethylthioformamid, N,N-Diethylthioformamid, N-Methyl-N-ethylthio-formamid, N,N-Dimethylacetamid, N-Methyl-N-Ethylacetamid, N,N-Diethylacetamid, Nitroethan, Nitromethyltoluol und Triethylphosphat.

Die Herstellung der Zusammensetzung aus den Komponenten (α1) und (α2) erfolgt vorzugsweise durch einfaches Vermischen der beiden Komponenten. Sollte der Polyol (α1) einen Schmelzpunkt oberhalb der Raumtemperatur haben, so kann es bevorzugt sein, den Polyol bis zum Schmelzpunkt zu erhitzen und dann mit dem Additiv zu vermischen. Denkbar ist aber auch, dass, wenn eine der Komponenten (α1) oder (α2) bei der Herstellung der Zusammensetzung in fester und eine Komponente in flüssiger Form vorliegt, die feste Komponente in der flüssigen Komponente zu lösen. So kann beispielsweise ein fester Polyol in einem flüssigen Additiv oder ein festes Additiv in einem flüssigen Polyol gelöst werden.

Erfindungsgemäß geeignete Zusammensetzungen sind beispielsweise die Zusammensetzungen (Alle Prozentangeben, sofern nicht anderweitig angegeben, sind in Volumenprozent angegeben. Weiterhin beziehen sich alle Angaben in Volumenprozent der einzelnen Komponenten auf die Menge der entsprechenden Verbindung in einer der kommerziell erhältlichen, höchstmöglichen Konzentrationen, sofern nicht anders angegeben): -25% N,N-Diethylacetamid + 75% Triethylenglykol, 25% Triethylenglykol + 75% Aceton, 25% Triethylenglykol + 75% DMSO, 25% Triethylenglykol + 75% Ethanol, 50% Triethylenglykol + 50% Aceton, 50% Triethylenglykol + 50% DMSO, 50% Triethylenglykol + 50% Ethanol, 75% Triethylenglykol + 25% Aceton, 75% Triethylenglykol + 25% DMSO, 75% Triethylenglykol + 25% Ethanol, 95% Triethylenglykol + 5% N,N-Dimethylacetamid, ≥ 96 Gew.-% 1,2,6-Hexanetriol, ≥ 80 Gew.-% 3-Methyl-1,3,5-Pentantriol, 75 % 1,2,6-Hexantriol (96 gew.-%ig) + 25 % 3-Methyl-1,3,5-Pentantriol (80 gew.-%ig), 50 % 1,2,6-Hexantriol (96 gew.-%ig) + 50 % 3-Methyl-1,3,5-Pentantriol (80 gew.-%ig), 25 % 1,2,6-Hexantriol (96 gew.-%ig) + 75 % 3-Methyl-1,3,5-Pentantriol (80 gew.-%ig).

Das in Kontakt bringen der Zusammensetzung mit der biologischen Probe im Verfahrensschritt ii) erfolgt vorzugsweise dadurch, dass die biologische Probe in die Zusammensetzung, welche beim in Kontakt bringen vorzugsweise in flüssiger Form vorliegt, eingetaucht wird, so dass die gesamte Probe von der Zusammensetzung durchtränkt werden kann. Wird als biologische Probe ein Fluid oder isolierte Zellen oder z. B. eine granuläre Probe eingesetzt, so erfolgt das in Kontakt bringen durch Vermischen der biologischen Probe mit der Zusammensetzung oder durch Suspendieren der biologischen Probe in der Zusammensetzung. Alternativ können bei der gewählten Temperatur feste Zusammensetzungen direkt in einer flüssigen biologischen Probe (z. B. Blut, Plasma, Urin, Speichel) gelöst werden.

Weiterhin ist es bevorzugt, dass die Zusammensetzung bei dem in Kontakt bringen mit der biologischen Probe in fluider, besonders bevorzugt in flüssiger Form vorliegt, wobei die bei 20°C bestimmte Viskosität der Zusammensetzung üblicherweise in einem Bereich von 1 bis 1.000.000 mPas, vorzugsweise in einem Bereich von 1 bis 100.000 mPas und besonders bevorzugt in einem Bereich von 1 bis 10.000 mPas liegt. Alternativ kann die Zusammensetzung jedoch auch fest sein und mit einer flüssigen biologischen Probe in Kontakt gebracht werden.

Dabei ist es gemäß einer besonderen Ausführungsform des erfindungsgemäßen Verfahrens bevorzugt, dass das in Kontakt bringen der biologischen Probe mit der Zusammensetzung bei einer Temperatur in einem Bereich von -80°C bis +80°C, bevorzugt in einem Bereich von 0°C bis +80°C, noch mehr bevorzugt in einem Bereich von 2, 3, 4, 5, 6, 7 oder 8°C bis +80°C und darüber hinaus bevorzugt in einem Bereich von 18°C bis +80°C erfolgt, beispielsweise bei einer Temperatur von mindestens -20°C, -19°C, -18°C, -17°C, -16°C, -15°C, -14°C, -13°C, -12°C, - 11°C, -10°C, -9°C, -8°C, -7°C, -6°C, -5°C, -4°C, -3°C, -2°C, -1°C, 0°C, 1°C, 2°C, 3°C, 4°C, 5°C, 6°C, 7°C, 8°C, 9°C, 10°C, 11°C, 12°C, 13°C, 14°C, 15°C, 16°C, 17°C, 18°C, 19°C, 20°C, 21°C, 22°C, Raumtemperatur, 23°C, 24°C, 25°C, 26°C, 27°C, 28°C, 29°C, 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C oder 60°C erfolgt.

Dabei bedeutet die Formulierung, dass das ,,in Kontakt bringen der biologischen Probe mit der Zusammensetzung bei einer Temperatur in einem Bereich von - 80°C bis +80°C" oder bei einer der anderen, vorstehend genannten Temperaturen erfolgt, dass nach dem in Kontakt bringen der biologischen Probe mit der Zusammensetzung die Temperatur der auf diese Weise erhaltenen Mischung innerhalb der vorstehend genannten Temperaturen liegt. So kann es beispielsweise sein, dass als biologisches Material eine auf Temperaturen von weniger als-20°C tiefgefrorene Probe, beispielsweise eine in flüssigem Stickstoff gelagerte Probe eingesetzt wird, wobei in diesem Falle eine solche Menge an Zusammensetzung bzw. eine Zusammensetzung mit einer solchen Temperatur eingesetzt wird, dass nach dem in Kontakt bringen der tiefgefrorenen biologischen Probe mit der Zusammensetzung die Temperatur der Mischung (und somit auch die Temperatur der biologische Probe) im vorstehend genannten Temperaturbereich liegt.

Weiterhin kann es gemäß einer besonderen Ausführungsform des erfindungsgemäßen Verfahrens auch bevorzugt sein, dass die biologische Probe nach dem in Kontakt bringen mit der Zusammensetzung im Verfahrensschritt ii), vorzugsweise unter den vorstehend genannten Temperaturbedingungen, noch in einem sich an den Verfahrensschritt ii) anschließenden Verfahrensschritt iii) bei einer Temperatur in einem Bereich von -80°C bis +80°C, bevorzugt in einem Bereich von 0°C bis +80°C, noch mehr bevorzugt in einem Bereich von 2, 3, 4, 5, 6, 7 oder 8°C bis +80°C und darüber hinaus bevorzugt in einem Bereich von 18°C bis +80°C erfolgt, beispielsweise bei einer Temperatur von mindestens -20°C, -19°C, -18°C, - 17°C, -16°C, -15°C, -14°C, -13°C, -12°C, -11°C, -10°C, -9°C, -8°C, -7°C, -6°C, - 5°C, -4°C, -3°C -2°C -1°C 0°C, 1°C, 2°C, 3°C, 4°C 5°C 6°C 7°C 8°C, 9°C, 10°C, 11°C, 12°C, 13°C, 14°C, 15°C, 16°C, 17°C, 18°C, 19°C, 20°C, 21°C, 22°C, Raumtemperatur, 23°C, 24°C, 25°C, 26°C, 27°C, 28°C, 29°C, 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C oder 60°C gelagert wird, wobei diese Lagerung über einen Zeitraum von mindestens einem Tag, vorzugsweise mindestens 2 Tagen, darüber hinaus bevorzugt mindestens 3 Tagen, gegebenenfalls für mindestens eine Woche, mindestens zwei Wochen, mindestens einen Monat, mindestens drei Monate, mindestens sechs Monate oder auch mindestens 12 Monate erfolgen kann.

Das Verfahren gemäß der vorliegenden Erfindung ermöglicht die Lagerung einer behandelten biologischen Probe bei Raumtemperatur, bei Kühlschranktemperaturen oder bei noch höheren Temperaturen, ohne dass es zu einem erkennbaren Abbau von Biomolekülen wie Nukleinsäuren oder Proteinen in der biologische Probe kommt. Dieses stellt einen signifikanten Vorteil gegenüber herkömmlichen Stabilisierungsverfahren dar, da das Verfahren ohne den Einsatz von flüssigem Stickstoff oder von Tiefkühlvorrichtungen durchgeführt und die stabilisierte Probe auch ohne den Einsatz von flüssigem Stickstoff oder von Tiefkühlvorrichtungen gelagert werden kann.

Nach der erfindungsgemäßen Behandlung und gegebenenfalls vor oder auch nach einem möglichen Lagenmgsschritt iii) kann die behandelte biologische Probe auch in geeignete Einbettungsmittel eingebettet werden, beispielsweise in Paraffin oder dergleichen, um dann aus der biologischen Probe für histologische Untersuchungen geeignete Gewebeschnitte einfacher anfertigen zu können.

Weiterhin kann es gemäß einer besonderen Ausführungsform des erfindungsgemäßen Verfahrens bevorzugt sein, dass sich an den Verfahrensschritt i) und ii) noch ein Verfahrensschritt
iv) histologische Analyse der mit der Zusammensetzung in Kontakt gebrachten biologischen Probe oder Analyse von Biomolekülen in der oder aus der mit der Zusammensetzung in Kontakt gebrachten biologischen Probe
anschließt, wobei dieser Verfahrensschritt iv) gegebenenfalls auch vor oder nach einer Lagerung gemäß dem vorstehend beschriebenen Verfahrensschritt iii) durchgeführt werden kann.

Unter einer histologischen Untersuchung wird vorzugsweise jedes Untersuchungsverfahren verstanden, welches geeignet ist, den morphologischen Zustand eines Gewebes, eines Gewebeschnittes, einer Zelle oder von subzellulären Strukturen zu analysieren, beispielsweise mittels Mikroskopie und gegebenenfalls unter Einsatz von dem Fachmann bekannten Färbe- oder Markierungstechniken.

Als Biomoleküle, die analysiert werden können, kommen alle dem Fachmann bekannten Biomoleküle in Betracht, insbesondere natürliche, modifizierte oder synthetische Nukleinsäuren, natürliche, modifizierte oder synthetische Proteine oder Oligopeptide, Hormone, Wachstumsfaktoren, Substrate des Stoffwechsels, Lipide, Oligosaccharide oder Proteoglukane. Als Nukleinsäuren kommen alle dem Fachmann bekannten Nukleinsäuren in Betracht, insbesondere Ribonukleinsäuren (RNA), beispielsweise mRNA, siRNA, miRNA, snRNA, t-RNA, hnRNA oder Ribozyme, oder Deoxyribonukleinsäuren (DNA). Grundsätzlich kann es sich um jeden Typ von Polynukleotid handeln, der ein N-Glykosid oder C-Glykosid einer Purin- oder Pyrimidinbase darstellt. Die Nukleinsäure kann einzel-, doppel- oder mehrsträngig, linear, verzweigt oder zirkulär sein. Sie kann einem in einer Zelle vorkommenden Molekül entsprechen, wie etwa genomische DNA oder Boten-RNA (mRNA), oder in *vitro* erzeugt werden wie Komplementär-DNA (cDNA), Gegenstrang-RNA (aRNA), oder synthetische Nukleinsäuren. Die Nukleinsäure kann aus wenigen Untereinheiten, mindestens zwei Untereinheiten, bevorzugt acht oder mehr Untereinheiten bestehen, wie etwa Oligonukleotide, mehreren hundert Untereinheiten bis hin zu mehreren tausend Untereinheiten, wie etwa bestimmte Expressionsvektoren, oder bedeutend mehr Untereinheiten, wie genomische DNA. Bevorzugt enthält die Nukleinsäure die kodierende Information für ein Polypeptid in funktionellem Zusammenhang mit regulatorischen Sequenzen, die die Expression des Polypeptids in der Zelle erlauben, in die die Nukleinsäure eingebracht wird oder natürlich vorliegt. So ist die Nukleinsäure in einer bevorzugten Ausführungsform ein Expressionsvektor. In einer anderen Ausführungsform ist sie eine pDNA (Plasmid-DNA), eine siRNA, eine siRNA-Duplizes oder eine siRNA-hetero-Duplizes, wobei unter dem Begriff "siRNA" Ribonukleinsäuren mit einer Länge von etwa 22 Nukleotiden verstanden werden, die durch Spaltung einer doppelsträngigen RNA (dsRNA) durch das Enzym "Dicer" entstehen und in den Enzymkomplex "RISC" (RNA-induced silencing complex) eingebaut werden.

Die Formulierung "Analyse von Biomolekülen in der oder aus der mit der Zusammensetzung in Kontakt gebrachten biologischen Probe" bedeutet dabei, dass die Analyse sowohl *in situ* als auch *ex situ,* also beispielsweise nach Isolierung der Biomoleküle aus der biologischen Probe erfolgen kann. Sollen Biomoleküle aus einer biologischen Probe zum Zwecke der Analyse isoliert werden, so kann es vorteilhaft sein, insbesondere im Falle von Zellen, Geweben oder anderen komplexen oder kompakten Proben die Proben zunächst zu homogenisieren, wobei dieses Homogenisieren auf mechanischem Weg, beispielsweise mittels Kanülen, Mörsern, Rotor-Stator-Homogenisatoren, einer Kugelmühle oder dergleichen, auf chemischem Weg durch den Einsatz geeigneter Lysepuffer, welche üblicherweise Detergenzien und/oder chaotrope Substanzen beinhalten, auf enzymatischem Weg, beispielsweise unter Einsatz von Proteasen, oder durch eine Kombination dieser Maßnahmen, durchgeführt werden kann.

Zur histologischen Analyse oder zur Analyse von Biomolekülen in der oder aus der biologischen Probe können dabei alle dem Fachmann bekannten und geeignet erscheinenden Analyseverfahren eingesetzt werden, vorzugsweise Verfahren ausgewählt aus der Gruppe umfassend die Lichtmikroskopie, die Elektronenmikroskopie, die konfokale Laserscanningmikroskopie, die Laser-Micro-Dissection, Scanningelektronenmikroskopie, das Western-Blotting, den Southern-Blotting, den Enzyme-linked Immonosorbent-Assay (ELISA), die Immunpräzipitation, die Affinitätschromatographie, die Mutationsanalyse, die Polyacrylamidgelelektrophorese (PAGE), insbesondere die zweidimensionale PAGE, die HPLC, die Polymerasekettenreaktion (PCR), die RFLP-Analyse (Restriction Fragment Length Polymorphism-Analyse), die-SAGE-Analyse (Serial Analysis of Gen Expression), die FPLC-Analyse (Fast Protein Liquid Chromatography), die Massenspektrometrie, beispielsweise die MALDI-TOFF-Massenspektrometrie oder die SELDI-Massenspektrometrie, die Microarray-Analyse, die LiquiChip-Analyse, die Analyse der Aktivität von Enzymen, HLA-Typing, Sequenzierung, WGA (,,Whole Genome Amplification"), RT-PCR, Real-Time-PCR bzw -RT-PCR, RNase-Protection-Analyse oder Primer-Extension-Analyse.

Gemäß einer besonderen Ausführungsform des erfindungsgemäßen Verfahrens umfasst der Verfahrensschritt iv) sowohl eine histologische Analyse der biologischen Probe als auch eine Analyse von Biomolekülen in der oder aus der biologischen Probe. Gemäß einer weiteren besonderen Ausführungsform des erfindungsgemäßen Verfahrens umfasst der Verfahrensschritt iv) sowohl eine Analyse von Nukleinsäuren in der oder aus der biologischen Probe als auch eine Analyse von Proteinen in der oder aus der biologischen Probe.

Ein weiterer Bestandteil der Erfindung ist ein Kit, wie er in Anspruch 15 definiert ist.

Der erfindungsgemäße Kit umfasst eine Zusammensetzung wie in Anspruch 1 definiert und eine Vorrichtung zur Behandlung einer biologischen Probe, umfassend als Vorrichtungsbestandteile:
(β1) wenigstens ein Gefäß mit zumindest einer Öffnung zur Aufnahme einer Flüssigkeit bis zu einer Füllhöhe h,
(β2) wenigstens einen Deckel zum Verschließen der zumindest einen Öffnung,
(β3) wenigstens eine Eintauchhilfe, die mit zumindest einem der Deckel (β2) verbunden ist, sowie
(β4) eine um eine Achse L drehbar angeordnete Mischvorrichtung umfassend Leitflächen zur Durchmischung der Flüssigkeit in dem wenigestens einen Gefäß (β1).

Werden die erfindungsgemäßen Zusammensetzungen zur Behandlung einer biologischen Probe eingesetzt, so kann sich je nach Art und Menge des in der Zusammensetzung enthaltenen Polyols aufgrund der hohen Viskosität der Zusammensetzung das Problem auftreten, dass zum einen die Probe nur schwer in die Zusammensetzung eingetaucht werden kann und das zum anderen eine gute Durchmischung der Zusammensetzung, die vorteilhaft ist, um nach dem Eintauschen der Probe in die Zusammensetzung auftretende Inhomogenitäten insbesondere in der unmittelbaren Umgebung der biologische Probe zu erzielen, erschwert sein kann.

Mittels der ersten erfindungsgemäßen Vorrichtung kann diesen Schwierigkeiten begegnet werden, da durch die Eintauchhilfe (β3) ein Eintauchen der biologischen Probe in die Zusammensetzung und durch die Mischvorrichtung (β4) ein Durchmischen der Zusammensetzung und damit ein homogenes Durchdringen der Probe mit der Zusammensetzung ermöglicht wird.

Sofern als Gefäß (β1) ein zylindrisches Gefäß eingesetzt wird, liegt der Durchmesser des Gefäßes (β1) vorzugsweise in einem Bereich von 5 bis 500 mm, besonders bevorzugt in einem Bereich von 10 bis 200 mm und am meisten bevorzugt in einem Bereich von 10 bis 30 mm.

Als Deckel (β2) können ebenfalls alle dem Fachmann bekannten und zu diesem Zweck geeigneten Deckel eingesetzt werden. Erfindungsgemäß bevorzugt Deckel sind diejenigen Deckel, die in der US 6,602,718 und der US 2004/0043505 A1 als mit dem Bezugszeichen 22 versehener Deckel, in der US 200510160701 A1 als mit dem Bezugszeichen 40 versehener Deckel, in der US 2003/0086830 A1 als mit dem Bezugszeichen 14 versehener Deckel, in der US 2003/0087423 A1 als mit dem Bezugszeichen 14 versehener Deckel oder in der WO 2005/014173 A1 als mit dem Bezugszeichen 22 versehener Deckel offenbart sind. Auch der Offenbarungsgehalt dieser Druckschriften hinsichtlich geeigneter Deckel für das Verschließen von für die Aufnahme von biologischen Proben geeigneten Gefäßen wird hiermit als Referenz eingeführt und bildet einen Teil der Offenbarung der vorliegenden Erfindung.

Gemäß einer besonderen Ausführungsform der ersten erfindungsgemäßen Vorrichtung beträgt die Füllhöhe h 20 bis 99 %, besonders bevorzugt 40 bis 90 % und am meisten bevorzugt 50 bis 80 % der Gesamthöhe H des Gefäßes (β1).

Neben dem Gefäß (β1) und dem Deckel (β2) umfasst die Vorrichtung auch eine Eintauchhilfe (β3).

Bei dieser Eintauchhilfe (β3) kann es sich grundsätzlich um jede Vorrichtung handeln, die geeignet ist, dass beim Verschließen des Deckels (β2) eine Probe, welche sich beispielsweise auf der Oberfläche einer in dem Gefäß (β1) befindlichen Flüssigkeit ruht oder welche beispielsweise, wenn die Eintauchhilfe (β3) eine Aufnahme für eine biologische Probe umfasst, sich in oder an der Eintauchhilfe (β3) befindet, vollumfänglich in die Flüssigkeit eintaucht.

Im einfachsten Fall kann es sich bei der Eintauchhilfe (β3) um einen Stempel handeln, dessen Querschnitt etwa dem Querschnitt des Gefäßes (β1) entspricht. Dabei ist es bevorzugt, dass zumindest ein Teil der Eintauchhilfe (β3) Löcher aufweist, durch die beim Verschließen des Deckels (β3) die sich in dem Gefäß (β1) befindliche Flüssigkeit durchtreten kann, so dass es beim Verschließen des Deckels nicht zu einer Kompression der Flüssigkeit kommt. Vorzugsweise ist daher zumindest ein Teil der Eintauchhilfe (β3) aus einem netzartigen oder siebartigen Material gefertigt ist. Denkbar ist auch, im Falle einer Eintauchhilfe (β3), welche nicht mit Löchern zum Durchtritt für die Flüssigkeit versehen ist, unterhalb der Eintauschhilfe (β3) Fortsätze anzubringen, welche als Abstandshalter zwischen der Eintauchhilfe (β3) und der Probe dienen, so dass es zu einem vollumfänglichen Kontakt zwischen der Flüssigkeit und der Probe kommt, wobei in diesem Fall der Querschnitt der Eintauchhilfe (β3) kleiner als der Querschnitt des Gefäßes (β1) sein sollte, um ein Komprimieren der Flüssigkeit beim Eintauchen der Eintauchhilfe (β3) zu verhindern.

Neben einem einfachen Stempel kann die Eintauchhilfe (β3) auch in Form eines Probenhalters ausgebildet sein. Eine solche Eintauchhilfe ist beispielsweise in der US 2003/0087423 als mit dem Bezugszeichen 152 versehener Probenhalter beschrieben. Der Offenbarungsgehalt der US 2003/0087423 hinsichtlich der Struktur und der Beschaffenheit des Probenhalters wird hiermit als Referenz eingeführt und bildet einen Teil der Offenbarung der vorliegenden Erfindung. Insbesondere kann dieser Probenhalter eine Öffnung aufweisen, durch die eine biologische Probe in das Innere des Probenhalters eingebracht werden kann, wobei diese Öffnung nach dem Einbringen der Probe geschlossen werden kann. Auch hier ist es bevorzugt, dass zumindest ein Teil der Seitenflächen oder des Bodens aus einem netzartigen oder siebartigen Material gefertigt ist, damit eine in dem Gefäß (β1) befindliche Flüssigkeit beim Verschließen des Deckels (β2) auch in Kontakt mit der sich im Probenhalter befindlichen Probe treten kann. Weiterhin kann der Probenhalter auch beispielsweise als eine einfache Klammer ausgebildet sein, welche eine biologische Probe einklemmen kann, wobei die Klammer so an dem Deckel (β2) angebracht ist, dass beim Verschließen des Deckels (β2) die eingeklemmte Probe in die Flüssigkeit taucht.

Es ist erfindungsgemäß bevorzugt, dass die Eintauchhilfe (β3) in geschlossenem Zustand des Gefäßes (β1) bis zu einer Höhe h', die höchstens gleich der Füllhöhe h, besonders bevorzugt jedoch höchstens 80 %, noch mehr bevorzugt höchstens 50 % der Füllhöhe h erreicht, in das Gefäß (β1) eindringt.

Weiterhin umfasst die Vorrichtung eine um eine Achse L drehbar angeordnete Mischvorrichtung (β4) umfassend Leitflächen zur Durchmischung der Flüssigkeit in dem wenigstens einen Gefäß (β1). Vorzugsweise sind diese Leitflächen, im Vergleich zum Durchmesser des Gefäßes (β1), so angeordnet, ausgebildet und dimensioniert, dass beim gleichmäßigen Drehen der Mischvorrichtung (β4) um die Achse L bei einer Umdrehungszahl von 10 Umdrehungen pro Minute ein in die Mitte des Gefäßes (β1) eingetragener Tropfen (2 µl) einer Farbstofflösung aus 1 g Kaliumpermanganat in einem Liter Wasser bei Raumtemperatur nach einer Minute, vorzugsweise nach 60 Sekunden, besonders bevorzugt nach 30 Sekunden, noch mehr bevorzugt nach 15 Sekunden und am meisten bevorzugt nach 10 Sekunden zu einer augenscheinlich homogenen Verteilung des Farbstoffes im gesamten Gefäß (β1) führt wenn die Vorrichtung zu 90 % der Gesamthöhe H des Gefäßes (β1) mit Wasser gefüllt ist.

Diese Mischvorrichtung (β4) kann im einfachsten Fall beispielsweise aus einem oberhalb, unterhalb oder in Höhe der Eintauchhilfe angeordneten Stift bestehen, dessen Länge in etwa dem Durchmesser des Gefäßes (β1) entspricht und der in seiner Mitte über eine Verbindung mit dem Zentrum des Deckels verbunden ist. Wird der Deckel (β2) zugedreht, so kommt es durch die Bewegung des Stiftes im Inneren des Gefäßes (β1) zu einem Durchmischen der Flüssigkeit.

Grundsätzlich kann die Mischvorrichtung (β4) fest, vorzugsweise einstückig mit dem Deckel (β2) verbunden sein, so dass ein Durchmischen nur dann erfolgt, wenn der Deckel (β2) gedreht wird, was beispielsweise beim Verschließen des Gefäßes (β1) der Fall ist. Denkbar ist er auch, die Mischvorrichtung (β4) so anzuordnen, dass sie beispielsweise mittels eines Rades, welches mit der Mischvorrichtung (β4) verbunden ist, oder aber mittels eines mit der Mischvorrichtung (β4) verbundenen Hebels, betätigt werden kann, wobei sich der Hebel bzw. das Rad vorzugsweise außerhalb des Gefäßes (β1), besonders bevorzugt unterhalb des Bodens oder oberhalb des Deckels (β2), befindet. In diesem Fall kann die Mischvorrichtung (β4) auch dann betätigt werden, wenn der Deckel (β2) nicht gedreht wird, was insbesondere dann vorteilhaft sind, wenn innerhalb der Vorrichtung eine sterile Umgebung aufrechterhalten werden soll. Weiterhin ist es möglich, eine entsprechende Kombination aus einem bestimmten, an dem Gefäß (β1) befindlichen Gewinde und einem bestimmten Deckel (β2) einzusetzen, welche dadurch gekennzeichnet ist, dass der Deckel über das Gewinde auf das Gefäß geschraubt werden kann und, nachdem der das gesamte Gewinde durchlaufen hat, frei auf dem Gefäß gedreht werden kann. Ein solcher Verschluss ist beispielsweise zum Schutz von Kleinkindern an Behältnissen mit toxischen oder ätzenden Substanzen bekannt. In diesem Fall kann zwar die Mischvorrichtung (β4) auch nur dann betätigt werden, wenn der Deckel gedreht wird, doch kommt es beim Drehen des Deckels nicht zwangsläufig zum Öffnen des Gefäßes (β1).

Gemäß einer besonderen Ausführungsform der Vorrichtung ist die Eintauchhilfe (β3) Bestandteil der Mischvorrichtung (β4). In diesem Fall sind die Leitflächen zur Durchmischung der Flüssigkeit an der Eintauchhilfe (β3) angebracht oder sind Bestandteil der Eintauchhilfe (β3).

Gemäß einer besonders bevorzugten Ausführungsform der Vorrichtung ist diese zu mindestens 10%, besonders bevorzugt zu mindestens 20%, darüber hinaus bevorzugt zu mindestens 30%, darüber noch mehr bevorzugt zu mindestens 40% und am meisten bevorzugt zu mindestens 50% der Gesamthöhe H mit der im Zusammenhang mit dem erfindungsgemäßen Verfahren beschriebenen Zusammensetzung umfassend mindestens einen Polyol und gegebenenfalls ein oder mehrere Additive gefüllt.

Weiterhin kann die Vorrichtung einen Deckel (β2) umfassen, der von einer Nadel durchstoßen ist, wie dies beispielsweise in der WO 2005/014173 A1 beschrieben ist, wobei es in diesem Zusammenhang besonders bevorzugt ist, dass das Gefäß mit der im Zusammenhang mit dem erfindungsgemäßen Verfahren beschriebenen Zusammensetzung gefüllt ist, dass in dem Gefäß ein Unterdruck herrscht und dass die Eintauchhilfe so innerhalb des Gefäßes angeordnet ist, dass sie auch ohne Öffnen des Deckels vertikal entlang der Höhe h bewegt werden kann. Auf diese Weise ist es möglich, mittels des Unterdrucks im Gefäß (β1) eine definierte Menge einer Flüssigkeit als biologische Probe, beispielsweise eine definierte Blutmenge, durch den Deckel hindurch in das Gefäß (β1) zu saugen, durch vertikale Bewegung der Eintauchhilfe (β3) diese Flüssigkeitsprobe unter die Zusammensetzung umfassend mindestens einen Polyol und gegebenenfalls mindestens ein Additiv zu drücken und dann mittels der Mischvorrichtung (β4) die flüssige biologische Probe und die Zusammensetzung innig zu vermischen.

Dabei kann die Zusammensetzung bereits in der Vorrichtung bzw. dem Gefäß (γ2) abgefüllt sein, wie dies beispielsweise bei der zweiten erfindungsgemäßen Vorrichtung der Fall ist. Denkbar ist aber auch, dass das Kit als einen weiteren Bestandteil eine Dosierungsvorrichtung (γ4) umfasst, die mit der Zusammensetzung gefüllt ist und mittels derer definierte Portionen der Zusammensetzung, vorzugsweise unter sterilen Bedingungen, in die Vorrichtung bzw. das Gefäß (γ2) eingefüllt werden können. Eine solche Dosierungsvorrichtung (γ4) kann beispielsweise in Form eines Seifenspenders ausgebildet sein.

Die Erfindung wird nun anhand nichtlimitierender Figuren und Beispiele näher erläutert.

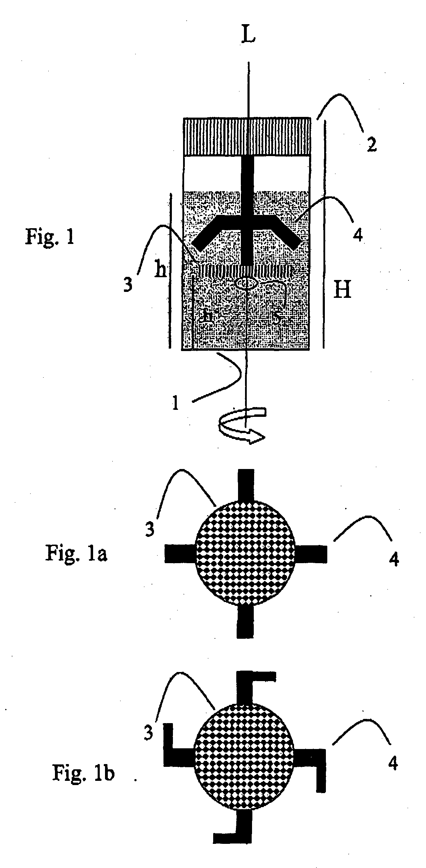

Es zeigt die Figur 1 eine Ausführungsform der ersten erfindungsgemäßen Vorrichtung, bei der die Mischvorrichtung (β4) oberhalb der Eintauchhilfe (β3) angeordnet ist, von der Seite. Die Figuren 1a und 1b zeigen zwei Mischvorrichtungen (β4) mit unterschiedlich gestalteten Leitflächen, die unterhalb der Eintauchhilfe (β3) angeordnet sind, im Querschnitt.

Die Figur 2 zeigt eine weitere Ausführungsform der ersten erfindungsgemäßen Vorrichtung, bei der die Mischvorrichtung (β4) unterhalb der Eintauchhilfe (β3) angeordnet ist, von der Seite.

Die Figur 3 zeigt eine weitere Ausführungsform der ersten erfindungsgemäßen Vorrichtung, bei der die Mischvorrichtung (β4) Bestandteil der Eintauchhilfe (β3) ist, von der Seite.

Die Figur 4 zeigt eine Ausführungsform der ersten erfindungsgemäßen Vorrichtung, bei der die Eintauchhilfe (β3) eine Probenaufnahme umfasst und bei der die Mischvorrichtung (β4) Bestandteil der Eintauchhilfe (β3) ist, von der Seite. Die Figur 4a zeigt die mit dem Deckel verbundene Eintauchhilfe (β3) von der Seite. Die Figur 4b zeigt eine Eintauchhilfe (β3), die so ausgestaltet ist, dass sie schräge Seitenflächen als Leitflächen aufweist.

Die Figur 5 zeigt eine Ausführungsform der zweiten erfindungsgemäßen Vorrichtung von der Seite. Die Figur 5a zeigt die Vorrichtung mit dem darin befindlichen Körper (β5) von oben.

Die Figur 6 zeigt das im Beispiel 4 erhaltene SDS-Polyacrylamidgel und den im Beispiel 4 erhaltenen Western-Blot.

Die Figur 7 zeigt die Ergebnisse der im Beispiel 5 erhaltenen Enzym-Aktivitätsanalyse in Form eines Säulendiagramms.

Die Figuren 8, 8a und 8b zeigen die Ergebnisse der im Beispiel 6 erhaltenen RNA-Analyse nach Lagerung der Proben bei hohen Temperaturen in Form eines Agarose-Formaldehyd-MOPS-Gels.

Die Figuren 9 und 9a zeigen die Ergebnisse der im Beispiel 8 durchgeführten Analyse der Aktivität eines erfindungsgemäß stabilisierten Proteins (der reversen Transkriptase "Omniscript" der Firma QIAGEN) in Form eines nach einer PCR-Reaktion angefertigten Agarose-TAE-Gels.

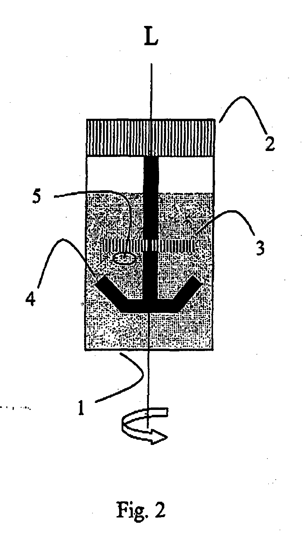

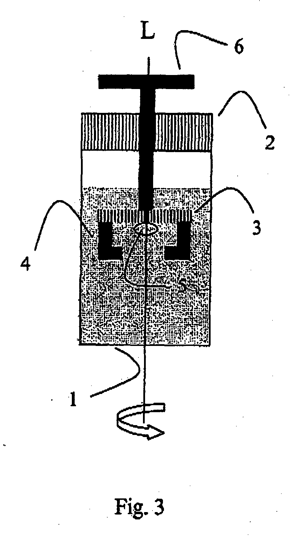

Die in der Figur 1 dargestellte Vorrichtung umfasst ein Gefäß 1 mit einer Gesamthöhe H, welches mit einem Deckel 2 verschlossen werden kann. Das Gefäß 1 ist bis zur Füllhöhe h mit einer vorzugsweise flüssigen Zusammensetzung gefüllt, vorzugsweise mit der Zusammensetzung beinhaltend den mindestens einen Polyol und gegebenenfalls das mindestens eine Additiv. Mit dem Deckel 2 verbunden ist eine Eintauchhilfe 3, die netz- oder siebartig ausgebildet ist Beim Verschließen des Deckels 2 wird die Probe 5, die sich vor dem Eintauchen der Eintauchhilfe 3 auf der Oberfläche der Zusammensetzung befand, in die Zusammensetzung eingetaucht, wobei sich die Eintauchhilfe 3 im geschlossenen Zustand des Gefäßes 1 bis zur Höhe h' in das Gefäß 1 eindringt. Wird der Deckel 2 zugedreht, so führen die über der Eintauchhilfe 3 angeordneten Leitflächen 4 der Mischvorrichtung zu einem Durchmischen der Zusammensetzung. Wie den Figuren 1a und 1b zu entnehmen sind, können die Leitflächen 4 der Mischvorrichtung unterschiedlich ausgestaltet sein. Gezeigt sind in den Figuren 1a und 1b vier Leitflächen 4, jedoch können grundsätzlich auch weniger als vier oder mehr als vier Leitflächen 4 genutzt werden, solange durch das Drehen der Mischvorrichtung um die Achse L eine ausreichende Durchmischung der Zusammensetzung in dem Gefäß 1 sichergestellt ist. Gemäß der Figur 2 können die Leitflächen 4 auch unterhalb der Eintauchhilfe 4 angeordnet sein, während gemäß der Figur 3 die Leitflächen 4 auch Bestandteil der Eintauchhilfe 3 sein können. In diesem Fall kann die Eintauchhilfe 3 beispielsweise einen oder mehrere sich in radialer Richtung (also in einer Richtung senkrecht zur Achse L) erstreckende Vorsprünge, die beispielsweise in Form von kleinen Schaufeln ausgebildet sind, aufweisen. Erfindungsgemäß besonders bevorzugt ist es, wenn, wie in der Figur 3 gezeigt, sich die Leitflächen 4 möglichst in der Nähe der biologischen Probe 5 befinden, da in diesem Fall eine möglichst gründliche Durchmischung der Zusammensetzung in unmittelbarer Probennähe und somit eine besonders homogenes Durchdringen der Probe 5 mit der Zusammensetzung gewährleistet werden kann. Die in der Figur 3 dargestellte Vorrichtung umfasst des weiteren noch ein Rad 6, über das die Leitflächen 4 der Mischvorrichtung auch dann bewegt werden können, wenn der Deckel 2 verschlossen ist und nicht bewegt wird.

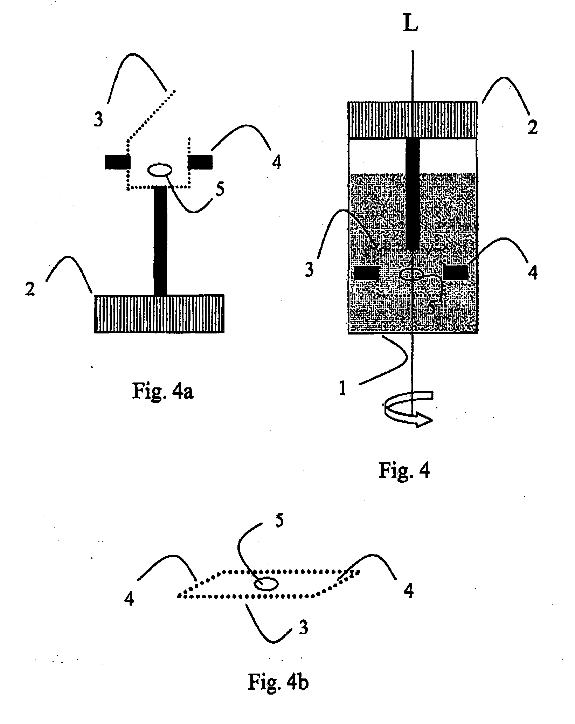

In der Figur 4 ist eine Vorrichtung dargestellt, bei der die Eintauchhilfe 3 eine Probenaufnahme umfasst, wie dies aus der US 2003/10087423 A1 bekannt ist. Dabei kann die mit einer Probenaufnahme versehene Eintauchhilfe 3 auch so ausgestaltet sein, dass sie schräge Seitenflächen aufweist (und somit, wenn sie von oben betrachtet wird, einen trapezförmigen Umriss aufweist), so dass diese schrägen Seitenflächchen beim Drehen der Eintauchhilfe um die Achse L als Leitflächen 4 fungieren (siehe Figur 4b).

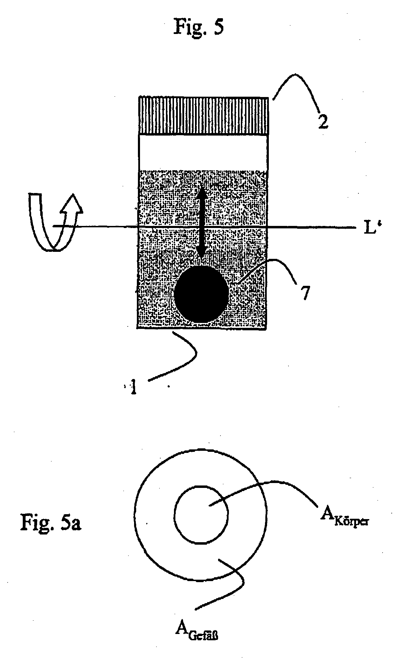

In der Figur 5 ist eine Ausführungsform der zweiten erfindungsgemäßen Vorrichtung zu sehen. Diese ist bis zur Füllhöhe h mit der eingangs beschriebenen Zusammensetzung gefüllt, wobei sich im inneren des Gefäßes 1 eine Stahlkugel 7 befindet. Wird die Vorrichtung um die Achse L' gekippt, so gerät die Stahlkugel in Richtung des in der Figur 5 gezeigten Pfeils in Bewegung, so dass es zu einem Durchmischen der Zusammensetzung kommt.

### BEISPIELE

### 1. Histologische Analyse erfindungsgemäß behandelter Proben

Lebergewebe der Ratte wurde unverzüglich nach Organentnahme mit je 1 ml der in der Tabelle 1 angegebenen Zusammensetzungen versetzt und für 1 Tag bei 25°C im Inkubator gelagert. Nach der Lagerung werden die Gewebestücke aus den Lösungen entnommen, in Plastikkasseften überführt und nach üblichen Protokollen in einer aufsteigenden Ethanolreihe, sowie in Xylol inkubiert und in Paraffin eingebettet. Mit Hilfe eines Mikrotoms werden Schnitte aus den in Paraffin eingebetteten Gewebe erstellt und diese auf dem Objektträger nach üblichen Methoden einer Hämotoxylin-Eosin-Färbung unterzogen. Die gefärbten Gewebeschnitte werden lichtmikroskopisch untersucht. Das Ergebnis ist in Tabelle 1 zusammengefasst :

**Tabelle 1**

| **Zusammensetzung** | **Ergebnis** |
|---|---|
| 1,2,6-Hexantriol | Morphologie erhalten |
| 3-Methyl-1,3,5-Pentantriol | Morphologie erhalten |
| 75% 1,2,6-Hexantriol + 25% 3-Methyl-1,3,5-Pentantriol | Morphologie erhalten |
| 75% 1,2,6-Hexantriol + 25% 1,5 Pentandiol | Morphologie erhalten |
| 50% Triethylenglykol + 50% 2,4 Pentandiol | Morphologie erhalten |
| Triethylenglykol | Morphologie erhalten |
| 25% DMSO + 75% 1,2,6-Hexantriol | Morphologie erhalten |
| 50% DMSO + 50% 1,5 Pentandiol | Morphologie erhalten |
| 75% DMSO+25% 2,4 Pentandiol | Morphologie erhalten |

Wie der Tabelle 1 zu entnehmen ist, lassen sich mit dem erfindungsgemäßen Verfahren frische Gewebeproben bei Raumtemperaturbedingungen stabilisieren, wobei mit den so stabilisierten Proben noch histologische Analysen durchgeführt werden können.

### 2. RNA-Analyse erfindungsgemäß behandelter und gelagerter Proben

Lebergewebe der Ratte wurde unverzüglich nach Organentnahme mit je 1 ml verschiedener Lösungen (s. Tabelle 2) versetzt und bei Raumtemperatur bis zu 28 Tagen und bei 4-8°C im Kühlschrank für bis zu 3 Monaten gelagert. Im Anschluss an die Lagerung wird die RNA aus den gelagerten Proben isoliert.

Zur RNA-Isolierung wird das Gewebe nach Lagerung aus den Lösungen entfernt und je 10 mg Gewebe 350 µl eines handelsüblichen Guanidinium-Isothiocyanat-Puffers, wie z. B. RLT-Puffer der Firma QIAGEN, Hilden, Deutschland, zugeben. Die Probe wird mit Hilfe einer Kugelmühle, wie z. B. TissueLyzer der Firma QIAGEN, über einen Zeitraum von 2 x 2 min bei 20 Hz mit einer 5 mm Stahlkugel homogenisiert, wobei der Guanidinium-Isothiocyanat-Puffer auf aus dem Stand der Technik bekannte Weise die Zellen lysiert und die freigesetzten Proteine denaturiert. Anschließend werden die Lysate bei 14000 UpM für 3 min zentrifugiert. Vom Überstand werden 350 µl, die 10 mg Gewebe repräsentieren, abgenommen. Zu diesen Proben wird 1 Volumen (350 µl) 70 %-iges Ethanol zugefügt und durch mehrmaliges Auf- und Abpipettieren oder durch Vortexen über einen Zeitraum von ca. 5 s gemischt. Das Lysat wird anschließend in eine handelsübliche Silica-Membran enthaltene Spin-Säule, wie z. B. RNeasy-Säulen der Firma QIAGEN, aufgetragen und durch Zentrifugation (1 min bei 10000 x g) durch die Membran hindurchgeführt. Die RNA bleibt an der Membran gebunden und wird anschließend mit einem ersten handelsüblichen Guanidinium-Isothiocyanat-haltigen Waschpuffer, beispielsweise mit dem Puffer RW1 der Firma QIAGEN, gewaschen. Anschließend wird zur enzymatischen Entfernung etwaig gebundener gesamt-DNA DNaseI in einen geeigneten Puffer auf die Säule aufgeben und für 15 min bei Raumtemperatur zwecks Abbau der gebundenen DNA inkubiert. Im Anschluss wird erneut mit einem ersten handelsüblichen Guanidinium-Isothiocyanat-haltigen Waschpuffer, beispielsweise mit dem Puffer RW1 der Firma QIAGEN, und danach mit einem zweiten Tris-haltigen bzw. Tris- und alkoholhaltigen Waschpuffer, z. B. Puffer RPE der Firma QIAGEN, gewaschen. Dabei werden die Waschpuffer jeweils durch Zentrifugation (1 min bei 10000 x g) durch die Membran hindurchgeführt. Die Waschung mit dem zweiten Tris-haltigen bzw. Tris- und alkoholhaltigen Waschpuffer wird mit einem geringeren Volumen wiederholt wobei gleichzeitig die Membran durch die Zentrifugation (2 min bei maximaler Umdrehungsgeschwindigkeit, hier 20000 x g) getrocknet wird. Zur Elution werden 40 µl RNase-freies Wasser auf die Membran pipettiert, um die gereinigte RNA von der Membran abzulösen. Nach einer Inkubation von 1 min bei einer Temperatur im Bereich von 10 - 30 °C wird das Eluat durch Zentrifugation (1 min bei 10000 x g) durch die Membran hindurchgeführt und der Elutionsschritt wird zum Zwecke einer vollständigen Elution noch einmal wiederholt.

Die Menge an isolierter Gesamt-RNA wird nach Verdünnung in Wasser durch photometrische Messung der Lichtabsorption bei einer Wellenlänge von 260 nm ermittelt. Die Qualität der so gewonnenen RNA wird durch die photometrische Bestimmung des Verhältnisses der Lichtabsorption bei 260 nm zu derjenigen bei 280 nm bestimmt. Die Ergebnisse der Isolierungen sind in Tabelle 2 dargestellt.

Der Tabelle 2 ist zu entnehmen, dass frische biologische Proben durch das erfindungsgemäße Verfahren bei Raumtemperatur stabilisiert werden können und das selbst nach Lagerungszeiten von bis zu drei Monaten noch ausreichende Mengen an RNA aus diesen Proben isoliert werden können, wobei diese RNA eine durch das Verhältnis der Lichtabsorption bei 260 nm zu derjenigen bei 280 nm gekennzeichnete Qualität aufweist.

**Tabelle 2**

| **Zusammensetzung** | **Lagerungtemperatur** | **Lagerungsdauer** | **260nm/ 280nm** | **Ausbeute/ 10mg Gewebe** |
|---|---|---|---|---|
| 75% 1,2,6-Hexantriol + 25% 1,5-Pentandiol | 4°C | 14d | 2,0 | 80,8 |
| | | 28d | 1,9 | 50,1 |
| | | 2 Monate | 1,9 | 90,7 |
| | | 3 Monate | 1,9 | 68,1 |
| 75 % 1,2,6-Hexantriol + 25 % 3-Methyl-1,3,5-Penentriol | 25°C | 9d | 2,0 | 46,3 |
| | | 14d | 2,1 | 50,4 |
| | | 21d | 2,1 | 57,3 |
| | | 28d | 2,0 | 38,5 |
| 3-Methyl-1,3,5-Pentantrol | 25°C | 9d | 2,1 | 47,0 |
| | | 14d | 2,0 | 37,9 |
| | | 21d | 2,0 | 47,9 |
| | | 28d | 2,1 | 39,2 |

### 3. DNA-Analyse erfindungsgemäß behandelter und gelagerter Proben

Lungengewebe der Ratte wurde unverzüglich nach Organentnahme mit je 1 ml verschiedener Lösungen (s. Tabelle 3) versetzt und bei 25°C für 6 Tage gelagert. Im Anschluss an die Lagerung wird die DNA aus den gelagerten Proben isoliert.

Zur DNA-Isolierung wird das Gewebe nach Lagerung aus den Lösungen entfernt und je 10 mg Gewebe in 180 µl des Puffers ALT des Herstellers QIAGEN zugeben. Die Probe wird mit Hilfe einer Kugelmühle, wie z. B. TissueLyzer der Firma QIAGEN, über einen Zeitraum von 45 s bei 25 Hz mit einer 5 m Stahlkugel homogenisiert. Nach Zugabe von 40µl einer Protease K-Lösung (Hersteller QIAGEN) werden die Lysate für 1 Stunde bei 55°C unter Schütteln inkubiert. Nach der Inkubation wird 220 µl eines handelsüblichen Guanidinium-Hydrochlorid-haldgen Lysepuffers, wie der Puffer AL des Herstellers QIAGEN, zugegeben und die Proben mittels Vortexen durchmischt. Nach Mischung mit 220 µl 100% Ethanol werden die Proben auf eine Silica-Membran enthaltende Säule (QIAamp Mini Spin Column der Firma QIAGEN) aufgetragen und das Lysat mittels Zentrifugation für 1 min bei 10000 UpM durch die Membran geführt. Die DNA bleibt an der Membran gebunden und wird zunächst mit einem ersten handelsüblichen Guanidinium-Hydrochlorid-haltigen Waschpuffer, beispielsweise mit dem Puffer AW1 der Firma QIAGEN, und danach mit einem zweiten alkoholhaltigen Waschpuffer, z. B. Puffer AW2 der Firma QIAGEN, gewaschen. Dabei werden die Waschpuffer jeweils durch Zentrifugation (1 min bei 10000 x g bzw. 3 min bei 14000 x g) durch die Membran hindurchgeführt. Die Elution der DNA erfolgt durch Auftragung von 60 µl des Elutionspuffers AE (QIAGEN). Nach einminütiger Inkubation wird der Elutionspuffer durch Zentrifugation durch die Membran hindurchgeführt (1 min bei 10000 x g) und die Elution wiederholt.

Die Menge an isolierter Gesamt-DNA wird nach Verdünnung in Wasser durch photometrische Messung der Lichtabsorption bei einer Wellenlänge von 260 nm ermittelt. Die Qualität der so gewonnenen RNA wird durch die photometrische Bestimmung des Verhältnisses der Lichtabsorption bei 260 mn zu derjenigen bei 280 nm bestimmt. Die Ergebnisse der Isolierungen sind in Tabelle 3 dargestellt.

**Tabelle 3**

| **Reagenz** | **260nm/280n m** | **Ausbeute** |
|---|---|---|
| 1,2,6-Hexantriol | 1,9 | 30,9 |
| 3-Methyl-1,3,5-Pentantriol | 1,9 | 21,1 |
| 50% 1,2,6-Hexantriol / 50% 3-Methyl-1,3,5-Pentantriol | 1,9 | 19,4 |

Der Tabelle 3 ist zu entnehmen, dass sich durch das erfindungsgemäße Stabilisierungsverfahren auch DNA in den stabilisierten Proben selbst nach sechstägiger Lagerung bei Raumtemperatur in guter Ausbeute und in guter Qualität isolieren lässt, dass sich demnach das erfindungsgemäße Stabilisierungsverfahren sowohl zur Stabilisierung von RNA (siehe Beispiel 2) als auch zur Stabilisierung von DNA eignet.

### 4. Protein-Analyse erfindungsgemäß behandelter und gelagerter Proben

Lebergewebe der Ratte wurde unverzüglich nach Organentnahme mit je 1 ml verschiedenen Triolen (s. Tabelle 4) versetzt und für 2 Tage und 7 Tage bei 25°C im Inkubator gelagert. Im Anschluss an die Lagerung wird ein Proteinextrakt aus den gelagerten Proben hergestellt. Zur Kontrolle wird Lebergewebe verwendet, welches nach Entnahme aus der Ratte direkt in flüssigem Stickstoff gefroren und anschließend bei -80°C gelagert wurde.

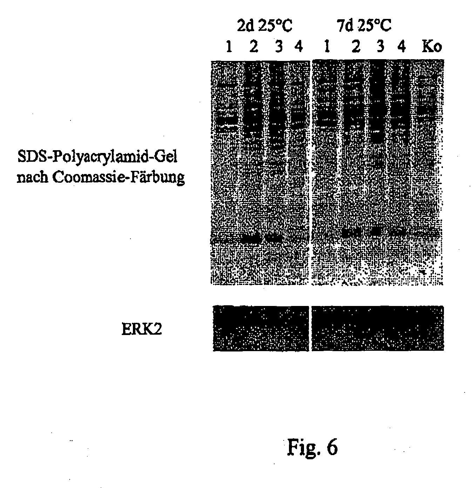

Zur Herstellung des Proteinextraktes wird das Gewebe nach Lagerung aus den Stabilisierungszusammensetzung entfernt und je 10 mg Gewebe 400 µl eines üblichen Extraktionspuffers, hier in einer Zusammensetzung von 8M Harnstoff, 100 mM Natriumdihydrogenphosphat und 10mM Tris, pH 8,0, zugeben und die Probe mit Hilfe einer Kugelmühle, z. B. dem TissueLyzer der Firma QIAGEN, homogenisiert. Das so entstandene Lysat wird für 15 s bei möglichst hoher Drehzahl (z. B. ca. 20000 × g) zentrifugiert, um ungelöste Bestandteile zu pelletieren. Der proteinhaltige Überstand wird abgenommen und die Proteinkonzentration mittels eines Bradford-Tests bestimmt. Je 3µg Protein wird auf einem SDS-Polyacrylamidgel nach üblichem Verfahren aufgetrennt und die Proteine im Gel mittels Coomassie-Färbung angefärbt (s. Abbildung 6).

Das Muster der angefärbten Proteinbanden ändert sich nicht im Vergleich zur Kontrolle während der Lagerung. Die Proteine bleiben stabil und unterliegen keiner Degradation.

Ein zweites SDS-Polyacrylamidgel mit identischem Probenauftrag wird mittels einer Semidry-Blotting-Apperatur nach Angaben des Herstellers auf eine Nitrozellulosemembran geblottet Die Membran wird nach dem Stand der Technik mit Milchpulver abgesättigt und mit einem ERK2-spezifischen Antikörper, z. B. dem Taq100-Antikörper der Firma QIAGEN, nach Angaben des Herstellers hybridisiert, und eine Immunodetektion durchgeführt. Die Ergebnisse sind ebenfalls in Abbildung 6 gezeigt,

Der Abbildung 6 ist zu entnehmen, dass auch Proteine in den behandelten Proben selbst nach siebentägiger Lagerung bei Raumtemperatur nach wie vor intakt und nicht degradiert sind und in guter Ausbeute isolieren werden können. Demnach eignet sich das erfindungsgemäße Stabilisierungsverfahren sowohl zur Stabilisierung von Nukleinsäuren (siehe Beispiele 2 und 3) als auch zur Stabilisierung von Proteinen wobei 1,2,4 Butantriol nicht Teil des erfindungsgemäßen Verfahrens ist.

**Tabelle 4**

| **Spur** | **Zusammensetzung** |
|---|---|
| 1 | 1,2,4-Butantriol |
| 2 | 3-Methyl-1,3,5 Pentantriol |
| 3 | 75% 1,2,3-Propantriel +25% 1,2,6-Hexantriol |
| 4 | 1,2,6-Hexantriol |
| Ko | Kontrolle |

### 5. Protein-Analyse erfindungsgemäß behandelter und gelagerter Proben

Lebergewebe der Ratte wird unverzüglich nach Organentnahme mit je 1 ml verschiedener Triole (s. Tabelle 5) versetzt und für 2 Tage bei 4-8°C im Kühlschrank gelagert. Als Positiv-Kontrolle dient Gewebe, welches unverzüglich nach Organentnahme in flüssigem Stickstoff eingefroren und gefroren bei -80°C gelagert wurde.

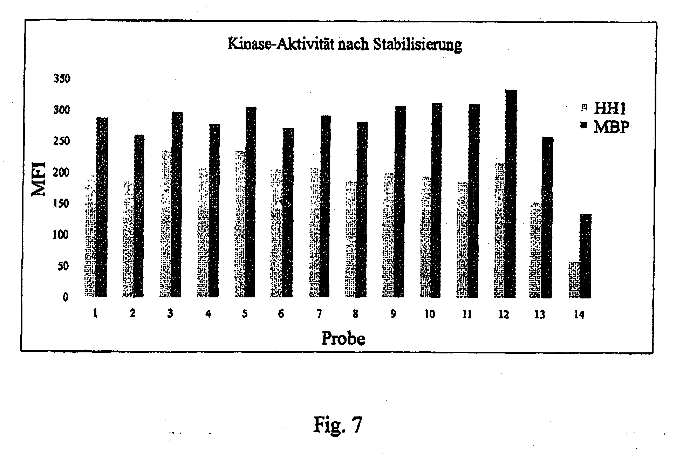

Im Anschluss an die Lagerung wird das Gewebe aus den Stabilisierungslösungen entfernt und je 10 mg Gewebe 400 µl eines Extraktionspuffers, beschrieben im "LiquiChip Broad-Range Ser/Thr-Kinase"-Handbuch der Firma QIAGEN zugeben. Die Proben werden mit Hilfe einer Kugelmühle, wie z. B. TissueLyzer der Firma QIAGEN, über einen Zeitraum von 5 min bei 30 Hz mit einer 5 mm Stahlkugel homogenisiert und anschließend über einen Zeitraum von 3 min mit 14000 UpM in einer Tischzentrifuge zentrifugiert. Der Überstand wird abgenommen und im Verhältnis 1 : 10 mit dem Extraktionspuffer verdünnt. Die so gewonnenen Proben werden auf die Aktivität von Kinasen hin überprüft, wobei das "LiquiChip Broad-Range Ser/Thr-Kinase"-Kit mit entsprechendem Gerät (LiquiChip Reader) der Firma QIAGEN laut Angaben des Herstellers eingesetzt wird. Als Negativ-Kontrolle wird der Assay-Puffer 1 des Herstellers ohne Proteinzugabe verwendet. Jede Probe wird als Doppelbestimmung angesetzt und gemessen. Die Ergebnisse in Form des Mittelwertes der gemessenen Fluoreszenz (MFI= medium fluoreszenz intensity) mit dem jeweiligen Kinase-Substrat (HH: Histon H1, MBP: Myelin Basic Protein) sind in Abbildung 7 dargestellt.

Die Ergebnisse zeigen deutlich, dass nach der erfindungsgemäßen Behandlung und Lagerung der biologischen Probe gemäß dem erfindungsgemäßen Verfahren die daraus isolierten Proteine ihre Aktivität wieder ausprägen können. Die Stabilisierungsreagenzien eignen sich somit auch für Downstream-Analyseu, welche auf native und aktive Proteine angewiesen sind.

**Tabelle 5**

| **Probe** | **Zusammensetzung** |
|---|---|
| 1 | 1,2,6-Hexantriol |
| 2 | 3-Methyl-1,3,5-Pentantriol |
| 3 | 75 % 1,2,6-Hexantriol + 25 % 3-Methyl-1,3,5-Pentantriol |
| 4 | 50% 1,2,6-Hexantriol + 50 % 3-Methyl-1,3,5-Pentantriol |
| 5 | 25 % 1,2,6-Hexantriol + 75 % 3-Methyl-1,3,5-Pentantriol |
| 6 | Gefroren (in flüssigem Stickstoff) |
| 7 | Negativ-Kontrolle |

### 6. RNA-Analyse erfindüngsgemäß behandelter und bei hohen Temperaturen gelagerter Proben

Nierengewebe der Ratte wurde unverzüglich nach Organentnahme mit je 1 ml 1,2,4-Butantriol (1), 3-Methyl-1,3,5-Pentantriol (2), 1,2,6-Hexantriol (3) und einer Mischung aus 75 % 1,2,3-Propantriol und 25 % 1,2,6-Hexantriol (4) versetzt und für 1 Tag bei 40°C bzw. 2h bei 50°C im Inkubator gelagert.

Alternativ, wird Lungengewebe der Ratte nach Organentnahme mit je 1 ml 1,2,4-Butantriol (1) oder 3-Methyl-1,3,5-Pentantriol (2) versetzt und für 1 Tag bei 4°-8°C im Kühlschrank gelagert. Nach Entnahme eines Teils der Proben zur RNA-Isolierung (a) werden die Gewebeproben in den Lösungen für 1 h bei 40°C gelagert. Danach wird erneut ein Teil der Proben entnommen (b) und zur RNA-Isolierung verwendet. Anschließend werden die verbleibenden Gewebeproben in den Lösungen erneut im Wechsel für 1 h bei 4-8°C im Kühlschrank und für 1h bei 40°C im Inkubator gelagert. Nach 4 Zyklen werden die restlichen nach der letzten Inkubation bei 40°C zur RNA-Isolierung verwendet (c).

Im Anschluss an die Lagerung wird die RNA aus den gelagerten Proben wie im Beispiel 2 beschrieben, isoliert.

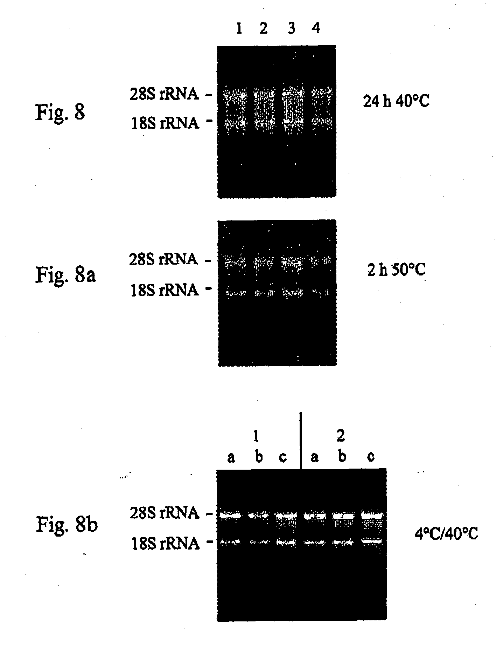

Die isolierte RNA wird auf Agarosegelen, die mit Ethidiumbromid angefärbt sind, analysiert. Hierzu werden beispielsweise 1,0 %-ige Formaldehyd-Agarose-MOPS-Gele angefertigt. Das Ergebnis ist in Abbildung 8 wiedergegeben.

Aus der Abbildung 8 ist ersichtlich, dass auch nach Lagerung bei Temperaturen von 40°C oder 50°C aus den erfindungsgemäß stabilisierten Proben noch ausreichende Mengen an intakter RNA isoliert werden können, wobei die Beispiele auf der Basis von C3 und C4 Triolen nicht Teil der Erfindung sind.

### 7. Behandlung von isolierten Proteinen gemäß dem erfindungsgemäßen Verfahren

Zum Nachweis der Eignung der Stabilisierungsreagenzien zur Stabilisierung isolierter Proteine wird eine aufgereinigte reverse Transkriptase, das Enzym "Omniscript" der Firma QIAGEN, verwendet.

Jeweils 5 µg des gereinigten Enzyms werden mit dem 10fachen Volumen der in Tabelle 6 aufgeführten Stabilisierungsreagenzien versetzt. Die Mischungen werden über Nacht bei 4-8°C im Kühlschrank gelagert. Zur Wiederaufreinigung des Enzyms aus den Stabilisierungsreagenzien wird eine automatisierte auf Nickel-NTA-Affinitätsbindung basierende Aufreinigung auf dem Gerät "Biosprint" nach Angaben des Herstellers QIAGEN durchgeführt. Vor der Aufreinigung werden alle Proben auf ein Gesamtvolumen 1 ml mit dem Assay-Puffer des Herstellers aufgefüllt und jeweils 50 µg Magnetic Bead-Suspension verwendet. Als Kontrollen werden zum einen 5 µg Omniscript im "storage buffer" des Herstellers unter gleichen Bedingungen gelagert (Probe 6) und zum anderen 5 µg Omniscript ohne vorgehende Lagerung in einer Stabilisierungslösung lediglich der Aufreinigung unterzogen (Probe 7). Des Weiteren wird 1 µl der für den Versuch verwendeten Reversen Transkriptase direkt, d. h. ohne Lagerung und/oder Aufreinigung als Positiv-Kontrolle in der PCR verwendet (Probe 8).

**Tabelle 6**

| **Probe** | **Zusammensetzung** | **Protein-konzentration [ng/ml]** |
|---|---|---|
| 1 | 1,2,6-Hexantriol | 74 |
| 2 | 3-Methyl-1,3,5-Pentantriol | 62 |
| 3 | 75 % 1,2,6-Hexantriol + 25 % 3-Methyl-1,3,5-Pentantriol | 52 |
| 4 | 50% 1,2,6-Hexantriol + 50 % 3-Methyl-1,3,5-Pentantriol | 58 |
| 5 | 25% 1,2,6-Hexantriol+75%3-Methyl-1,3,5-Pentantriol | 50 |
| 6 | Lagerung im Storage Buffer des Herstellers | 36 |
| 7 | Keine Lagerung, Aufreinigung | 54 |
| 8 | Keine Lagerung, keine Aufreinigung | nd |
| 9 | kein Enzym | nd |

Das gereinigte Enzym wird zur Überprüfung der Enzymaktivität für eine Reverse Transkription mit anschließender PCR verwendet. Hierfür wird nach der Aufreinigung die Proteinkonzentration mittels einer üblichen Bradford-Reaktion gemessen (Ergebnisse siehe Tabelle 6) und das aufgereinigte Enzym gegen den RT-Storage-buffer mit DTT (des Herstellers QIAGEN) dialysiert. Für die Reverse Transkription werden jeweils 2 µl der dialysierten Proteinfraktion eingesetzt. Für die Reverse Transkription wird eine Reaktionsmischung für alle Reaktionen hergestellt bestehend aus 2µl eines 10fach konzentrierten Reverse Transkriptase-Puffers, 10mM dNTP-Mix, 2 µM Oligo-dT15 (Omniscript-Kit der Firma QIAGEN), 75 ng Gesamt-RNA aus Hela-Zellen je Reaktion und mit dest. Wasser auf 18 µl Gesamtvolumen je Reaktion aufgefüllt Diese Mischung wird in die Reaktionsgefäße verteilt und je 2 µl der jeweiligen Omniscriptfraktion zugegeben. Die Reverse Transkription verläuft über 1 h bei 37°C. Als Negativ-Kontrolle wird Wasser anstelle der Reversen Transkriptase zugegeben (Probe 9).

In der anschließenden PCR wird ein 1,6 kb großes Fragment des humanen β -Actin-Trankriptes amplifiziert. Hierfür wird eine Reaktionsmischung für alle Reaktionen hergestellt bestehend aus 2 µl eines 10fach konzentrierten des PCR-Puffers, 4 mM dNTP-Mix, 0,4 µl einer 25 mM Magnesiumchlorid-Lösung, je 0,8 ml der Primer, 4 µl 5fach konzentrierte Q-Solution und 0,25 ml der Taq-DNA-Polymerase (PCR-Kit der Firma QIAGEN), aufgefüllt auf 19 µl Gesamtvolumen mit dest. Wasser je einzelner Reaktion. Die Reaktionsmischung wird in die Reaktionsgefäße verteilt und je 1 µl der zuvor generierten cDNA zugegeben. Als "Notemplate-control" wird anstelle der cDNA Wasser verwendet (Probe NTC). Die Amplifikation verläuft wie folgt: 5 min 93°C, 30 Zyklen mit jeweils 30 s 93°C, 30 s 55°C und 90 s 72°C, gefolgt von einmal 5 min 72°C. Jede Reaktion wird doppelt angesetzt.

Im Anschluss an die Amplifikation werden je 10 µl der PCR-Reaktionen auf ein 1 %,-Agarose-TAE-Gel aufgetragen und für 1 h bei 120 V aufgetrennt. Als Größenmarker dient die "Low DNA Mass Ladder" des Herstellers Invitrogen. Die Ergebnisse sind in Abbildung 10 und 10a dargestellt.

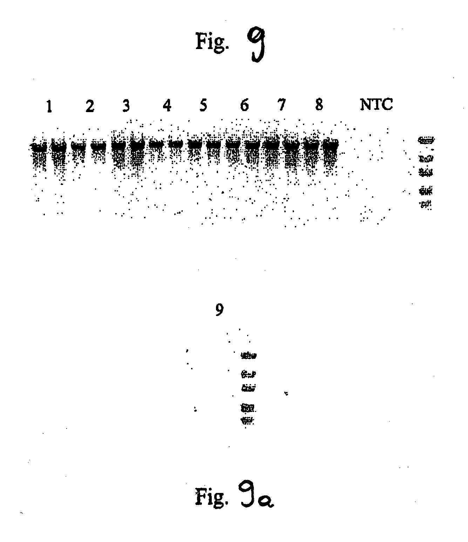

Aus der Abbildung 9 ist ersichtlich, dass auch isolierte Proteine mittels des erfindungsgemäßen Verfahrens gelagert und wieder aufgereinigt werden können, ohne dass die Proteine dabei in ihrer Aktivität nennenswert beeinflusst werden.

### 8. RNA-Analyse erfindungsgemäß behandelter Proben

Milzgewebe aus der Ratte wurde unverzüglich nach der Organentnahme in je 1 ml der in der Tabelle 7 angegebenen Zusammensetzungen versetzt und für 7 Tage bei 25°C gelagert. Anschließend wird die RNA gemäß dem im Beispiel 2 beschriebenen Verfahren aus diesen Proben isoliert.

In einer Downstream-Analyse wird das Verhalten der so isolierten RNA in einer PCR-Analyse bestimmt. Als Kontrolle diente dabei eine aus -80C tiefgefrorenem Milzgewebe isolierte RNA.

Zur Bestimmung des Verhaltens der isolierten RNA werden jeweils 10 ng Gesamt-RNA in einem Gesamtvolumen von 25 µl mit einem geeigneten Mastermix zur Real-Time-RT-PCR, wie z. B, dem Quantitect Probe RT-PCR-Kit der Firma QIAGEN, und Primer und Probe von kommerziell erhältlichen Assays, z. B. der Firma ABI, laut Angaben der Hersteller eingesetzt. Die Amplifikation erfolgt in einem geeigneten Real-Time-Amplifikationsgerät, wie z. B. dem 7700 der Firma ABI. Die Amplifikation erfolgt jeweils in einer Doppelbestimmung. Aus den ermittelten ct-Werten werden die Mittelwerte gebildet und die Standartabweichung ermittelt. Der ct-Wert kann zur relativen Quantifizierung der Transkriptmenge in der eingesetzten RNA verwendet werden. Die Ergebnisse sind in der Tabelle 7 angegeben.

**Tabelle 7**

| **Zusammensetzung** | **RANTES** | | **c-jun** | |
|---|---|---|---|---|
| | **ct** | **St.-Abw.** | **ct** | **St.-Abw.** |
| 3-Methyl-1,3,5-Pentantriol | 25,28 | 0,10 | 25,45 | 0,01 |
| 1,2,6-Hexantriol | 24,95 | 0,02 | 25,53 | 0,03 |
| Kontrolle | 25,03 | 0,00 | 25,61 | 0,05 |

Der Tabelle 7 ist zu entnehmen, dass sich die aus den erfindungsgemäß behandelten Proben isolierbare RNA auch gut für Downstream-Analysen eignet.

### 9. RNA-Analyse erfindungsgemäß behandelter, tiefgefrorener Proben

Lebergewebe der Ratte wurde unverzüglich nach Organentnahme in flüssigem Stickstoff tiefgefroren und danach in flüssigem Stickstoff gelagert. Je 20 bis 50 mg dieser Proben wurden dann mit jeweils 1 ml der in der Tabelle 8 angegebenen Zusammensetzungen inkubiert und für drei Tage bei 4 to 8°C gelagert. Anschließend wurde aus den so vorbehandelten Proben die RNA, wie im Beispiel 2 beschrieben, isoliert Das Ergebnis ist in der Tabelle 8 angegeben.

Der Tabelle 8 ist zu entnehmen, dass sich das erfindungsgemäße Verfahren nicht nur zur Stabilisierung frischer biologischer Proben, sondern auch zur Vorbereitung tiefgefrorener Proben für eine Analyse von Biomolekülen eignet.

**Tabelle 8**

| **Zusammensetzung** | **RNA-Menge [µg]** |
|---|---|
| Triethylenglyol | 65,6 |
| 1,2,6-Hexantriol | 46,7 |
| 1,7-Heptandiol | 53,5 |
| 1,5-Pentandiol | 48,3 |
| 1,6-Hexandiol | 51,7 |
| 2,4-Pentandiol | 45,4 |
| 2-Ethyl-2-(Hydroxymethyl)-1,3-Propandiol | 50,3 |
| 3- Allyloxy-12-Propandiol | 40,4 |

## Patentansprüche

1. Ein Verfahren zur Stabilisierung von Biomolekülen in einer biologischen Probe, umfassend die Verfahrensschritte
i) Bereitstellen einer biologischen Probe, und
ii) in Kontakt bringen der biologischen Probe mit einer Zusammensetzung, umfassend:
(α1) 1 bis zu 100 Gew.-% mindestens eines Polyols, wobei der Polyol ein C5-Polyol oder ein C6-Polyol ist und wobei es sich bei dem Polyol um ein Diol oder ein Triol handelt, sowie
(α2) 0 bis 99 Gew.-% mindestens eines Additivs, wobei das Additiv ein von Polyolen verschiedenes, organisches Lösungsmittel ist,
und wobei die Gesamtmenge der Komponenten (α1) und (α2) 100 Gew.-% beträgt.

2. Verfahren nach Anspruch 1, wobei es sich bei der biologischen Probe um eine gefrorene biologische Probe handelt.

3. Verfahren nach Anspruch 1, wobei es sich bei der biologischen Probe um eine nicht-gefrorene biologische Probe handelt.

4. Verfahren nach Anspruch 1, wobei der Polyol ausgewählt ist aus der Gruppe umfassend 1,2-Pentandiol, 1,3-Pentandiol, 1,4-Pentandiol, 1,5-Pentandiol, 2,3-Pentandiol, 2,4-Pentandiol, 1,2-Hexandiol, 1,3-Hexandiol, 1,4-Hexandiol, 1,5-Hexandiol, 1,6-Hexandiol, 2,3-Hexandiol, 2,4-Hexandiol, 2,5-Hexandiol, 3,4-Hexandiol, 1,2,3-Pentantriol, 1,2,4-Pentantriol, 1,2,5-Pentantriol, 1,3,5-Pentantriol, 2,3,4-Pentantriol, 1,2,3-Hexantriol, 1,2,4-Hexantriol, 1,2,5-Hexantriol, 1,2,6-Hexantriol, 2,3,4-Hexantriol, 2,3,5-Hexantriol, 3-Methyl-1,3,5-Pentantriol, Trimethylolpropanol, Pentaerythritol, Triethylenglykol, 1,2,3-Cyclopentantriol, 1,2,4-Cyclopentantriol, 1,2,3-Cyclohexantriol und 1,2,4-Cyclohexantriol.

5. Verfahren nach einem der vorhergehenden Ansprüche, wobei das in Kontakt bringen der biologischen Probe mit der Zusammensetzung bei einer Temperatur in einem Bereich von -80°C bis +80 °C erfolgt.

6. Verfahren nach einem der vorhergehenden Ansprüche, wobei das in Kontakt bringen der biologischen Probe mit der Zusammensetzung bei einer Temperatur in einem Bereich von 0°C bis +80 °C erfolgt.

7. Verfahren nach einem der vorhergehenden Ansprüche, wobei das Verfahren zusätzlich zu den Verfahrensschritten i) und ii) noch den Verfahrensschritt
iii) Lagerung der mit der Zusammensetzung in Kontakt gebrachten biologischen Probe bei einer Temperatur in einem Bereich von -80°C bis +80°C
umfasst.

8. Verfahren nach Anspruch 7, wobei die Lagerung der mit der Zusammensetzung in Kontakt gebrachten biologischen Probe bei einer Temperatur in einem Bereich von -0°C bis +80°C erfolgt.

9. Verfahren nach einem der vorhergehenden Ansprüche, umfassend, neben den Verfahrensschritten i) und ii) sowie gegebenenfalls iii), wie in den Ansprüchen 1 und 7 definiert, den Verfahrensschritt:
iv) Analyse von Biomolekülen in der oder aus der mit der Zusammensetzung in Kontakt gebrachten biologischen Probe.

10. Verfahren nach einem der Ansprüche 1 bis 8, umfassend, neben den Verfahrensschritten i) und ii) sowie gegebenenfalls iii), wie in den Ansprüchen 1 und 7 definiert, den Verfahrensschritt:
iv) histologische Analyse der mit der Zusammensetzung in Kontakt gebrachten biologischen Probe .

11. Verfahren nach einem der Ansprüche 1 bis 9 oder 10, wobei der Verfahrensschritt iv) sowohl die histologische Analyse als auch die Analyse von Biomolekülen umfasst.

12. Verfahren nach Anspruch 9 oder 11, wobei der Verfahrensschritt iv) sowohl die Analyse von Proteinen als auch die Analyse von Nukleinsäuren umfasst.

13. Das Verfahren nach einem der vorhergehenden Ansprüche, wobei die biologische Probe Organismen, isolierte Zellen, Organellen, Bakterien, Pilze oder Teile von Pilzen, Viren, Viroide, Prionen, Gewebe, Gewebefragmente, Gewebeschnitte, Körperflüssigkeiten, Biomoleküle, Pflanzen oder Teile von Pflanzen, Fäkalien, Abstriche, Punktate, Lebensmittelproben, Umweltproben, forensische Proben, beinhaltet.

14. Das Verfahren nach einem der vorhergehenden Ansprüche, wobei die Biomoleküle natürliche, modifizierte oder synthetische Nukleinsäuren, natürliche, modifizierte oder synthetische Proteine oder Oligopeptide, Hormone, Wachstumsfaktoren, Substrate des Stoffwechsels, Metabolite, Lipide, Kohlenhydrate, Oligosaccharide oder Proteoglukane darstellen.

15. Ein Kit, umfassend
(γ1) die Zusammensetzung, wie in einem der Ansprüche 1 und 4 definiert, sowie
(γ2) eine Vorrichtung zur Behandlung einer biologischen Probe, umfassend als Vorrichtungsbestandteile:
(β1) wenigstens ein Gefäß (1) mit zumindest einer Öffnung zur Aufnahme einer Flüssigkeit bis zu einer Füllhöhe h,
(β2) wenigstens einen Deckel (2) zum Verschließen der zumindest einen Öffnung,
(β3) wenigstens eine Eintauchhilfe (3), die mit zumindest einem der Deckel (β2) verbunden ist, sowie
(β4) eine um eine Achse L drehbar angeordnete Mischvorrichtung umfassend Leitflächen (4) zur Durchmischung der Flüssigkeit in dem wenigstens einen Gefäß (β1).

16. Verwendung des Kits nach Anspruch 15 in einem Verfahren nach einem der Ansprüche 1 bis 14.

## Claims

1. Method of stabilizing biomolecules in a biological sample, comprising the method steps
i) providing a biological sample, and
ii) bringing the biological sample in contact with a composition comprising:
(α1) 1 up to 100% by weight of at least one polyol, where the polyol is a C5 polyol or a C6 polyol and where the polyol is a diol or a triol, and
(α2) 0 to 99% by weight of at least one additive, where the additive is an organic solvent other than polyols,
and where the total of components (α1) and (α2) amounts to 100% by weight.

2. Method according to Claim 1, where the biological sample is a frozen biological sample.

3. Method according to Claim 1, where the biological sample is a nonfrozen biological sample.

4. Method according to Claim 1, where the polyol is selected from the group comprising 1,2-pentanediol, 1,3-pentanediol, 1,4-pentanediol, 1,5-pentanediol, 2,3-pentanediol, 2,4-pentanediol, 1,2-hexanediol, 1,3-hexanediol, 1,4-hexanediol, 1,5-hexanediol, 1,6-hexanediol, 2,3-hexanediol, 2,4-hexanediol, 2,5-hexanediol, 3,4-hexanediol, 1,2,3-pentanetriol, 1,2,4-pentanetriol, 1,2,5-pentanetriol, 1,3,5-pentanetriol, 2,3,4-pentanetriol, 1,2,3-hexanetriol, 1,2,4-hexanetriol, 1,2,5-hexanetriol, 1,2,6-hexanetriol, 2,3,4-hexanetriol, 2,3,5-hexanetriol, 3-methyl-1,3,5-pentanetriol, trimethylolpropanol, pentaerythritol, triethylene glycol 1,2,3-cyclopentanetriol, 1,2,4-cyclopentanetriol, 1,2,3-cyclohexanetriol and 1,2,4-cyclohexanetriol.

5. Method according to any of the preceding claims, where the bringing into contact of the biological sample with the composition is carried out at a temperature in a range of from -80°C to +80°C.

6. Method according to any of the preceding claims, where the bringing into contact of the biological sample with the composition is carried out at a temperature in the range of from 0°C to +80°C.

7. Method according to any of the preceding claims, where the method additionally comprises the method step
iii) storing at a temperature in the range of from -80°C to +80°C of the biological sample brought into contact with the composition,
in addition to method steps i) and ii).

8. Method according to Claim 7, where the storage of the biological sample brought into contact with the composition is effected at a temperature in the range of from -0°C to +80°C.

9. Method according to any of the preceding claims, comprising, in addition to method steps i) and ii) and, if appropriate, iii), as defined in Claims 1 and 7, the method step:
iv) analysis of biomolecules in, or from, the biological sample brought into contact with the composition.

10. Method according to any of Claims 1 to 8, comprising, in addition to method steps i) and ii) and, if appropriate, iii), as defined in Claims 1 and 7, the method step:
iv) histological analysis of the biological sample brought into contact with the composition.

11. Method according to any of Claims 1 to 9 or 10, where method step iv) comprises both the histological analysis and the analysis of biomolecules.

12. Method according to Claim 9 or 11, where method step iv) comprises both the analysis of proteins and the analysis of nucleic acids.

13. Method according to any of the preceding claims, where the biological sample comprises organisms, isolated cells, organelles, bacteria, fungi or parts of fungi, viruses, viroids, prions, tissue, tissue fragments, tissue sections, body fluids, biomolecules, plants or parts of plants, faecal matter, smears, tap fluids, food samples, environmental samples, forensic samples.

14. Method according to any of the preceding claims, where the biomolecules are natural, modified or synthetic nucleic acids, natural, modified or synthetic proteins or oligopeptides, hormones, growth factors, metabolic substrates, metabolites, lipids, carbohydrates, oligosaccharides or proteoglucans.

15. Kit, comprising
(γ1) the composition as defined in any of Claims 1 and 4, and
(γ2) a device for treating a biological sample, comprising, as components:
(β1) at least one vessel (1) with at least one port for receiving a fluid up to a filling level h,
(β2) at least one lid (2) for sealing the at least one port,
(β3) at least one immersion aid (3) which is connected to at least one of the lids (β2), and
(β4) a mixing device which is arranged rotatably about an axis L and which comprises guide vanes (4) for mixing the fluid in the at least one vessel (β1).

16. Use of the kit according to Claim 15 in a method according to any of Claims 1 to 14.

## Revendications

1. Procédé pour la stabilisation de biomolécules dans un échantillon biologique, comprenant les étapes suivantes:
i) préparation d'un échantillon biologique, et
ii) mise en contact de l'échantillon biologique avec une composition comprenant:
(α1) 1 à 100 % en poids d'au moins un polyol, le polyol étant un polyol en C5 ou un polyol en C6 et le polyol étant un diol ou un triol, ainsi que
(α2) 0 à 99 % en poids d'au moins un additif, l'additif étant un solvant organique différent des polyols,
et dans lequel la quantité totale des composants (α1) et (α2) vaut 100 % en poids.

2. Procédé selon la revendication 1, dans lequel l'échantillon biologique est un échantillon biologique congelé.

3. Procédé selon la revendication 1, dans lequel l'échantillon biologique est un échantillon biologique non congelé.

4. Procédé selon la revendication 1, dans lequel le polyol est sélectionné dans le groupe comprenant 1,2-pentanediol, 1,3-pentanediol, 1,4-pentanediol, 1,5-pentanediol, 2,3-pentanediol, 2,4-pentanediol, 1,2-hexanediol, 1,3-hexanediol, 1,4-hexanediol, 1,5-hexanediol, 1,6-hexanediol, 2,3-hexanediol, 2,4-hexanediol, 2,5-hexanediol, 3,4-hexanediol, 1,2,3-pentanetriol, 1,2,4-pentanetriol, 1,2,5-pentanetriol, 1,3,5-pentanetriol, 2,3,4-pentanetriol, 1,2,3-hexanetriol, 1,2,4-hexanetriol, 1,2,5-hexanetriol, 1,2,6-hexanetriol, 2,3,4-hexanetriol, 2,3,5-hexanetriol, 3-méthyl-1,3,5-pentanetriol, triméthylolpropanol, pentaérythritol, triéthylèneglycol, 1,2,3-cyclopentanetriol, 1,2,4-cyclopentanetriol, 1,2,3-cyclohexanetriol et 1,2,4-cyclohexanetriol.

5. Procédé selon l'une quelconque des revendications précédentes, dans lequel la mise en contact de l'échantillon biologique avec la composition est effectuée à une température dans une plage de -80°C à +80°C.

6. Procédé selon l'une quelconque des revendications précédentes, dans lequel la mise en contact de l'échantillon biologique avec la composition est effectuée à une température dans une plage de 0°C à +80°C.

7. Procédé selon l'une quelconque des revendications précédentes, dans lequel, en plus des étapes i) et ii), le procédé comprend encore l'étape de
iii) stockage de l'échantillon biologique mis en contact avec la composition à une température dans une plage de -80°C à +80°C.

8. Procédé selon la revendication 7, dans lequel le stockage de l'échantillon biologique mis en contact avec la composition est effectué à une température dans une plage de -0°C à +80°C.

9. Procédé selon l'une quelconque des revendications précédentes, comprenant, en plus des étapes i) et ii) ainsi qu'éventuellement iii), telles qu'elles sont définies dans les revendications 1 et 7, l'étape de
iv) analyse de biomolécules dans ou hors de l'échantillon biologique mis en contact avec la composition.

10. Procédé selon l'une quelconque des revendications 1 à 8, comprenant, en plus des étapes i) et ii) ainsi qu'éventuellement iii) telles qu'elles sont définies dans les revendications 1 et 7, l'étape de
iv) analyse histologique de l'échantillon biologique mis en contact avec la composition.

11. Procédé selon l'une quelconque des revendications 1 à 9 ou 10, dans lequel l'étape iv) comprend aussi bien l'analyse histologique que l'analyse de biomolécules.

12. Procédé selon la revendication 9 ou 11, dans lequel l'étape iv) comprend aussi bien l'analyse de protéines que l'analyse d'acides nucléiques.

13. Procédé selon l'une quelconque des revendications précédentes, dans lequel l'échantillon biologique contient des organismes, des cellules isolées, des organites, des bactéries, des champignons ou des parties de champignons, des virus, des viroïdes, des prions, des tissus, des fragments de tissus, des coupes de tissus, des liquides corporels, des biomolécules, des plantes ou des parties de plantes, des matières fécales, des frottis, des spécimens de ponction, des échantillons d'aliments, des échantillons environnementaux, des échantillons forensiques.

14. Procédé selon l'une quelconque des revendications précédentes, dans lequel les biomolécules représentent des acides nucléiques naturels, modifiés ou synthétiques, des protéines ou des oligopeptides naturelles, modifiées ou synthétiques, des hormones, des facteurs de croissance, des substrats du métabolisme, des métabolites, des lipides, des hydrates de carbone, des oligosaccharides ou des protéoglycanes.

15. Kit comprenant
(γ1) la composition telle qu'elle est définie dans une des revendications 1 et 4, ainsi que
(γ2) un dispositif pour le traitement d'un échantillon biologique, comprenant comme composants du dispositif:
(β1) au moins un récipient (1) avec au moins une ouverture destiné à recevoir un liquide jusqu'à une hauteur de remplissage h,
(β2) au moins un couvercle (2) destiné à fermer ladite au moins une ouverture,
(β3) au moins un accessoire plongeant (3), qui est relié audit au moins un couvercle (β2), ainsi que
(β4) un dispositif de mélange disposé de façon rotative autour d'un axe L, comprenant des faces de guidage (4) pour le mélange intime du liquide dans ledit au moins un récipient (β1).

16. Utilisation du kit selon la revendication 15 dans un procédé selon l'une quelconque des revendications 1 à 14.
